# EUROPEAN PATENT APPLICATION

(11) **EP 2 293 490 A1**
(43) Date of publication of application: **09.03.2011**
(21) Application number: 09769852.6
(22) Date of filing: 04.06.2009
(51) Int. Cl.: H04L 9/08

(54) **INFORMATION PROCESSING DEVICE, ENCRYPTION KEY MANAGEMENT METHOD, COMPUTER PROGRAM AND INTEGRATED CIRCUIT**

(30) Priority: 23.06.2008 JP 2008163071
(71) Applicant: Panasonic Corporation, Kadoma-shi Osaka 571-8501 (JP)
(72) Inventor: HAGA, Tomoyuki, Osaka-shi Osaka 540-6207 (JP); NICOLSON, Kenneth, Alexander, Osaka-shi Osaka 540-6207 (JP); MATSUSHIMA, Hideki, Osaka-shi Osaka 540-6207 (JP); ITO, Takayuki, Osaka-shi Osaka 540-6207 (JP); TAKAYAMA, Hisashi, Osaka-shi Osaka 540-6207 (JP); MAEDA, Manabu, Osaka-shi Osaka 540-6207 (JP)
(74) Representative: Grünecker, Kinkeldey, Stockmair & Schwanhäusser Anwaltssozietät
(86) International application number: PCT/JP2009/002531
(87) International publication number: WO 2009/157142

(57) **Abstract**

For the keys in a key tree group composed of root keys for each of multiple stakeholders, a shared key is generated between the multiple stakeholders, and access restrictions with respect to the generated shared key are flexibly set. A shared key control unit and a tamper-resistant module are provided for each of the multiple stakeholders. The shared key is set based on stakeholder dependency relationships. After the shared key is set, access to the shared key is controlled so that access is not possible by malicious stakeholders, so as to maintain the security level.

## Description

### [Technical Field]

The present invention relates to an information processing device, encryption key management method, computer program, and integrated circuit that, in a device provided with multiple stakeholders, allow the multiple stakeholders to share keys managed in a tree structure.

### [Background Art]

In recent years, along with increased awareness of information security, the need for technology to protect data has also increased.

Given this need, the Trusted Computing Group (TCG) was formed to develop and popularize a secure computer platform. The TCG has used a secure module called a Trusted Platform Module (TPM) to achieve a secure terminal environment (see Non-Patent Literature 1-3). There are three characteristic functions among the basic functions of the TCG.

The first characteristic function is a Trusted Boot function, which calculates integrity information for each module between activation of a terminal and booting of the OS and applications, performs cumulative processing to concatenate the calculated value with integrity information for previous modules (processing corresponding to TPM_Extend in the TCG), and stores the cumulative value in registers called Platform Configuration Registers (PCR) in the TPM.

The second characteristic function is an Attestation function that treats the value accumulated in the PCR as terminal environment information, notifies an external server of the terminal environment information, and verifies whether or not the terminal environment information is the expected environment information. The ability to remotely verify authentication in a terminal environment using these functions is one of the advantages of TCG technology.

The third characteristic function is a function called Protected Storage to protect storage data. This function is for storing a Storage Root Key (SRK), which is an encryption key generated within the TPM, in a secure memory region of the TPM. The Protected Storage function securely protects a plurality of encryption keys to be protected in memory outside of the TPM by treating the SRK as a root key and using the root key to encrypt the encryption keys.

Specifically, in order to protect keys used in encryption/decryption processing and in signature processing, this method associates the keys to be protected with nodes of a hierarchical tree structure having the SRK as a root key, in which the node key of a parent encrypts the node keys of its children. Since the SPK, which is the root key, is protected in the secure memory of the TPM, keys encrypted with a key other than the root key are secure even when managed on a memory external to the TPM. Furthermore, TCG technology has a migration function for the purpose of backing up these keys. The migration function is a function to copy keys to below the SRK of another TPM.

The TCG also targets cellular phones as TPM-bearing terminals, and specifications for a TPM for cellular phones have also been standardized (Non-Patent Literature 3, 4). A TPM for a cellular phone is called a Mobile Trusted Module (MTM). While implementing the functions of a TPM, the MTM adjusts some of the commands to a cellular phone and adds new commands. Additional functions define a secure boot function and a multi-stakeholder model.

A secure boot is a method that boots while calculating integrity information for each module between activation of a cellular phone terminal and booting of the OS and applications and verifying, within the local terminal, whether the calculated values are the expected values.

A multi-stakeholder model defines a model for implementing secure use of items by a plurality of stakeholders, such as a device maker, carrier, application service provider, and user, that are involved in the cellular phone terminal and have rights to the items. The itmes to which the stakeholders have rights are, for example, International Mobile Equipment Identity (IMEI) for the device maker, Subscriber Identification Module (SIM) related information for the carrier, service provision data for the application service provider, an address book for a user, etc.

In sum, a multi-stakeholder model is a model for securely using items to which various stakeholders have rights by individually allocating MTMs used by the various stakeholders. By using virtual technology, a plurality of MTMs can be virtually implemented on one terminal.

Patent Literature I discloses a method for arranging encryption keys in a tree structure and for management when updating encryption keys.

### [Citation List]

### [Patent Literature]

[Patent Literature 1] Japanese Patent Application Publication No. H11-187013
[Non-Patent Literature]

[Non-Patent Literature 1] TPM Main, Part I Design Principles, Specification Version 1.2, Level 2, Revision 103 (9 July 2007)
[Non-Patent Literature 2] TPM Main, Part 2 TPM Structures, Specification Version 1.2, Level 2, Revision 103 (9 July 2007)
[Non-Patent Literature 3] TPM Main, Part 3 Commands, Specification Version 1.2, Level 2, Revision 103 (9 July 2007)
[Non-Patent Literature 4] TCG Mobile Trusted Module Specification Version 1.0, Revision 1 (12 June 2007)
[Non-Patent Literature 5] TCG Mobile Reference Architecture Specification Version 1.0, Revision 1 (12 June 2007)

### [Summary of Invention]

### [Technical Problem]

In the above-described multi-stakeholder model, each stakeholder has a key tree with an SRK at the root. Accordingly, within one terminal, one key tree exists for each stakeholder.

In this context, it is assumed that stakeholder A uses the data and functions managed by stakeholder B. In particular, when stakeholder A wishes to access data encrypted with a node key in the tree having, at its root, the SRK managed in the TPM of stakeholder B, stakeholder A has to issue a request to stakeholder B for decryption of the data using stakeholder B's SRK. After decrypting the data using stakeholder B's SRK, stakeholder B transmits the decrypted data to stakeholder A.

If data to be shared between differing stakeholders exists, then for each request to access the shared data, overhead processing is thus necessary for the stakeholder managing the key to decrypt the data and securely transmit the decrypted data.

In order to avoid such overhead, it is necessary to encrypt, using a key shared by differing stakeholders, secure shared data that is accessed by the differing stakeholders. In other words, a mechanism to provide differing stakeholders with a shared key is necessary.

Under current TCG specifications, when sharing a key between two stakeholders, A and B, i.e. when allowing stakeholder A also to use stakeholder B's key, the TCG migration function is used. With stakeholder B as the source of migration and stakeholder A as the destination of migration, stakeholder B's key is migrated to stakeholder A. As a result, the key migrated from stakeholder B forms a node in the key tree managed by stakeholder A.

In this way, the migrated key becomes a shared key shared by stakeholders A and B. Data encrypted with the shared key is accessed directly by either stakeholder, without involving any other stakeholder.

However, when the migration function is used, the actual key that is migrated is stored by both stakeholder A and stakeholder B. This causes a problem of inefficiency, since duplicates of the shared key exist on one terminal. In particular, when a plurality of shared keys are set, a plurality of duplicate keys exist.

Patent Literature I also discloses a method wherein encryption keys are managed in a tree structure, the node of a parent encrypts the nodes of its children, a key group from a leaf to the root is distributed to a user as user keys, and a key tree is updated when a user withdraws.

However, since a root key is shared by all users, this leads to the problem that each time a user withdraws, an updated root key has to be redistributed to all users, making management complicated.

To solve these problems, it is an object of the present invention to provide an information processing device, encryption key management method, computer program, and integrated circuit that, in the context of a multi-stakeholder model, set as shared keys parts of nodes in a key tree having, as the root key, an SRK that differs for each stakeholder, and to provide an information processing device, encryption key management method, computer program, and integrated circuit that, when there is a malicious stakeholder sharing shared keys, flexibly revoke access to the shared keys by the malicious stakeholder.

### [Solution to Problem]

To solve the above problems, an information processing device according to the present invention is provided with a first shared key control unit corresponding to a first stakeholder; a second shared key control unit corresponding to a second stakeholder; a first tamper-resistant module that corresponds to the first stakeholder and is operable to manage, in a tree structure, a first encryption key group that includes a plurality of keys; a data storage unit storing predetermined data encrypted using a key included in the first encryption key group; and a second tamper-resistant module that corresponds to the second stakeholder and is operable to manage, in a tree structure, a second encryption key group that includes a plurality of keys, wherein when the first shared key control unit receives, from the second shared key control unit, a key sharing request directed at the first encryption key group, the first shared key control unit determines whether the second stakeholder depends on the first stakeholder and, when the determination is positive, searches the keys included in the first encryption key group for a predetermined key that is copyable to the second encryption key group and copies the predetermined key to the second encryption key group, and the second shared key control unit encrypts the predetermined key using a key included in the second encryption key group and stores the encrypted predetermined key in the second encryption key group in order to share a key that is included in the first encryption key group at a lower level of the tree structure than the predetermined key.

### [Advantageous Effects of Invention]

In an information processing device according to the present invention, when the first shared key control unit receives, from the second shared key control unit, key sharing request directed at the first encryption key group, then if the second stakeholder corresponding to the second shared key control unit depends on the first stakeholder corresponding to the first shared key control unit, a predetermined key that is included in the keys in the first encryption key group and is copyable to the second encryption key group is copied to the second encryption key group. In this way, under the condition that the second stakeholder depend on the first stakeholder, only the predetermined key is copied, rather than the entire key group included in a tree structure having the predetermined key as a parent key. As a result, inefficiency due to the existence of duplicates of an entire key group included in a tree structure having the predetermined key as the parent key is avoided in the first tamper-resistant module and the second tamper-resistant module.

Also, the second shared key control unit encrypts the predetermined key using a key included in the second encryption key group and stores the encrypted predetermined key in the second encryption key group in order to share a key that is included in the first encryption key group at a lower level of the tree structure than the predetermined key. In this way, by copying only the predetermined key, the second shared key control unit shares the key that is included in the first encryption key group, which is managed by the first tamper-resistant module corresponding to the first shared key control unit, at a lower level of the tree structure than the predetermined key. Accordingly, the second shared key control unit has easy access to encrypted, predetermined data stored in the data storage unit.

### [Brief Description of Drawings]

Fig. 1 shows a system overview of Embodiment I of the present invention.
Figs. 2A, 2B, and 2C show multi-stakeholders in Embodiment I of the present invention.
Fig. 3 shows a structure of an information processing terminal in Embodiment I of the present invention.
Fig. 4 shows a structure of a key tree in a tamper-resistant module in Embodiment 1 of the present invention.
Fig. 5 shows key attribute information in Embodiment I of the present invention.
Figs. 6A and 6B show key link information in Embodiment I of the present invention.
Fig. 7 shows an example of key attribute information in Embodiment I of the present invention.
Figs. 8A and 8B show a key management table in Embodiment I of the present invention.
Fig. 9 shows a structure of a stakeholder certificate in Embodiment 1 of the present invention.
Figs. 10A, 10B, and 10C show an example representing trust models that use stakeholder certificates in Embodiment I of the present invention.
Fig. 11 is a sequence diagram of setting shared keys in Embodiment 1 of the present invention.
Fig. 12 is a sequence diagram of setting shared keys in Embodiment I of the present invention.
Fig. 13 is a sequence diagram of using a shared key in Embodiment I of the present invention.
Fig. 14 is a flowchart overview of revoking a shared key in Embodiment I of the present invention.
Fig. 15 is a detailed flowchart of revoking a shared key in Embodiment 1 of the present invention.
Figs. 16A and 16B show structures of key trees before and after revoking a shared key in Embodiment 1 of the present invention.
Fig. 17 is a detailed flowchart of revoking a shared key in Embodiment 2 of the present invention.
Figs. 18A and 18B show structures of key trees before and after revoking a shared key in Embodiment 2 of the present invention.
Fig. 19 is a detailed flowchart of revoking a shared key in Embodiment 3 of the present invention.
Fig. 20 shows an encrypted shared data structure in Embodiment 4 of the present invention.
Fig. 21 is a sequence diagram of decryption of encrypted shared data using the encrypted shared data structure in Embodiment 4 of the present invention.
Fig. 22 is a detailed flowchart of revoking a shared key in Embodiment 4 of the present invention.
Fig. 23 is a flowchart of reinstating a shared key in Embodiment 3 of the present invention.

### [Description of Embodiments]

The information processing device according to claim 1 of the present invention is provided with a first shared key control unit corresponding to a first stakeholder; a second shared key control unit corresponding to a second stakeholder; a first tamper-resistant module that corresponds to the first stakeholder and is operable to manage, in a tree structure, a first encryption key group that includes a plurality of keys; a data storage unit storing predetermined data encrypted using a key included in the first encryption key group; and a second tamper-resistant module that corresponds to the second stakeholder and is operable to manage, in a tree structure, a second encryption key group that includes a plurality of keys, wherein when the first shared key control unit receives, from the second shared key control unit, a key sharing request directed at the first encryption key group, the first shared key control unit determines whether the second stakeholder depends on the first stakeholder and, when the determination is positive, searches the keys included in the first encryption key group for a predetermined key that is copyable to the second encryption key group and copies the predetermined key to the second encryption key group, and the second shared key control unit encrypts the predetermined key using a key included in the second encryption key group and stores the encrypted predetermined key in the second encryption key group in order to share a key that is included in the first encryption key group at a lower level of the tree structure than the predetermined key.

In an information processing device with the above structure, when the first shared key control unit receives, from the second shared key control unit, a key sharing request directed at the first encryption key group, then if the second stakeholder corresponding to the second shared key control unit depends on the first stakeholder corresponding to the first shared key control unit, a predetermined key that is included in the keys in the first encryption key group and is copyable to the second encryption key group is copied to the second encryption key group. In this way, under the condition that the second stakeholder depend on the first stakeholder, only the predetermined key is copied, rather than the entire key group included in a tree structure having the predetermined key as a parent key. As a result, inefficiency due to the existence of duplicates of an entire key group included in a tree structure having the predetermined key as the parent key is avoided in the first tamper-resistant module and the second tamper-resistant module.

Also, the second shared key control unit encrypts the predetermined key using a key included in the second encryption key group and stores the encrypted predetermined key in the second encryption key group in order to share a key that is included in the first encryption key group at a lower level of the tree structure than the predetermined key. In this way, by copying only the predetermined key, the second shared key control unit can share the key that is included in the first encryption key group, which is managed by the first tamper-resistant module corresponding to the first shared key control unit, at a lower level of the tree structure than the predetermined key. Accordingly, the second shared key control unit has easy access to encrypted, predetermined data stored in the data storage unit.

Furthermore, the second shared key control unit only has access to encrypted, predetermined data stored in the data storage unit when the second stakeholder depends on the first stakeholder. Accordingly, the key structure to manage the predetermined data is simplified in the first tamper-resistant module and the second tamper-resistant module, while guaranteeing confidentiality of the predetermined data.

In the information processing device according to claim 2 of the present invention, the second shared key control unit has a certificate certifying a dependency relationship with the first shared key control unit and transmits the certificate to the first shared key control unit when issuing the key sharing request directed at the first encryption key group, and the first shared key control unit determines that the second stakeholder depends on the first stakeholder when determining, in accordance with the certificate, that the second stakeholder at least uses the first tamper-resistant module that corresponds to the first stakeholder.

In an information processing device with the above structure, the first shared key control unit determines that the second stakeholder corresponding to the second shared key control unit depends on the first stakeholder when determining, in accordance with the certificate, that the second stakeholder at least uses the first tamper-resistant module that corresponds to the first stakeholder. Accordingly, dependency of the second stakeholder on the first stakeholder is reliably determined, and therefore the key structure to manage the predetermined data is simplified in the first tamper-resistant module and the second tamper-resistant module, while reliably prohibiting access by a malicious stakeholder to the predetermined data.

In the information processing device according to claim 3 of the present invention, each key included in the first encryption key group has attribute information indicating whether the key is copyable from the first encryption key group to the second encryption key group, and the first shared key control unit refers to the attribute information when searching the keys included in the first encryption key group for the predetermined key that is copyable.

In an information processing device with the above structure, the first shared key control unit refers to the attribute information, which indicates whether the key is copyable from the first encryption key group, when searching the keys included in the first encryption key group for the predetermined key that is copyable to the second encryption key group. Accordingly, by simply referring to the attribute information, a copyable key is searched for, thus simplifying the search for a copyable key.

In the information processing device according to claim 4 of the present invention, when a predetermined key that is copyable to the second encryption key group does not exist in the keys included in the first encryption key group, the first shared key control unit generates a copyable key and copies the generated key to the second encryption key group.

In an information processing device with the above structure, when a predetermined key that is copyable to the second encryption key group does not exist in the keys included in the first encryption key group, the first shared key control unit generates a copyable key and copies the generated key to the second encryption key group. Accordingly, even when a predetermined key that is copyable to the second encryption key group does not exist in the keys included in the first encryption key group, the second shared key control unit shares a key included in the first encryption key group. Therefore, the second shared key control unit has access to the data storage unit that stores predetermined data encrypted with a key included in the first encryption key group.

In the information processing device according to claim 5 of the present invention, the first shared key control unit (i) generates, as link information for the predetermined key, position information indicating a position of the key included in the first encryption key group at a lower level of the tree structure than the predetermined key, and (ii) copies the link information along with the predetermined key to the second encryption key group.

In an information processing device with the above structure, the first shared key control unit generates, as link information for the predetermined key, position information indicating a position of a key included in the first encryption key group at a lower level of the tree structure than the predetermined key, and copies the link information. Accordingly, by referring to the link information of the predetermined key, the second shared key control unit determines the position of the key at a lower level of the tree structure than the predetermined key. Therefore, the first tamper-resistant module and the second tamper-resistant module share the key at a lower level of the tree structure than the predetermined without that key being copied to the second tamper-resistant module. As a result, inefficiency due to the existence of duplicates of an entire key group included in a tree structure having the predetermined key as the parent key is avoided in the first tamper-resistant module and the second tamper-resistant module.

In the information processing device according to claim 6 of the present invention, the first shared key control unit generates, as link information for the key included in the first encryption key group at a lower level of the tree structure than the predetermined key, position information on a predetermined key included in the first encryption key group and position information on the predetermined key included in the second encryption key group.

In an information processing device with the above structure, the first shared key control unit generates, as link information for the keys included in the first encryption key group at a lower level of the tree structure than the predetermined key, position information on a predetermined key included in the first encryption key group and position information on the predetermined key included in the second encryption key group. Accordingly, by referring to the link information for the key at a lower level of the tree structure, the position of a parent key that encrypts the key at a lower level of the tree structure is identified. As a result, even if the first tamper-resistant module and the second tamper-resistant module share the key included in the first encryption key group at a lower level of the tree structure than the predetermined key, the key used to encrypt the key included in the first encryption key group at a lower level of the tree structure than the predetermined key is easily identified.

In the information processing device according to claim 7 of the present invention, the first shared key control unit and the second shared key control unit belong to a same shared key control unit.

In an information processing device with the above structure, the first shared key control unit and the second shared key control unit belong to the same shared key control unit. Therefore, one shared key control unit integrally controls shared keys shared between two stakeholders, allowing for more flexible control of access.

When two stakeholders store the same shared key, there is a danger that a shared key will be disclosed due to vulnerability in one of the stakeholders. Accordingly, if one of the stakeholders is determined to be malicious (if it is detected that the stakeholder has been revoked or tampered with), it is necessary to restrict access so that the stakeholder cannot use data encrypted with a shared key.

In the information processing device according to claim 8 of the present invention, when, in a first stakeholder environment managed by the first stakeholder, a second stakeholder environment managed by the second stakeholder is detected as having been tampered with or revoked, the first shared key control unit prevents the second shared key control unit from accessing the predetermined data by causing the first tamper-resistant module (i) to generate a replacement key to replace the predetermined key, (ii) to re-encrypt, using the replacement key, keys included in a tree structure having the predetermined key as a parent key, and (iii) to encrypt the replacement key using a parent key of the predetermined key.

In an information processing device with the above structure, when in the first stakeholder environment managed by the first stakeholder, the second stakeholder environment managed by the second stakeholder is detected as having been tampered with or revoked, the first tamper-resistant module generates a replacement key to replace the predetermined key, re-encrypts, using the replacement key, keys included in a tree structure having the predetermined key as a parent key, and encrypts the replacement key using a parent key of the predetermined key. As a result, the second shared key control unit cannot use the predetermined key to decrypt keys included in a tree structure having the replacement key as a parent key. Therefore, the second shared key control unit cannot use predetermined data encrypted with a key included in the tree structure having the replacement key as a parent key. The predetermined data is thus protected from malicious use.

In the information processing device according to claim 9 of the present invention, when, in a first stakeholder environment managed by the first stakeholder, a second stakeholder environment managed by the second stakeholder is detected as having been tampered with or revoked, the first shared key control unit prevents the second shared key control unit from using the predetermined key by causing the first tamper-resistant module to re-encrypt the predetermined data using a key other than keys included in a tree structure having the predetermined key as a parent key.

In an information processing device with the above structure, when the first stakeholder environment detects that the second stakeholder environment has been attacked, the first tamper-resistant module re-encrypts the predetermined data using a key other than keys included in a tree structure having the predetermined key as a parent key. As a result, the second shared key control unit cannot use keys included in the tree structure having the predetermined key as a parent key to decrypt the predetermined data. Therefore, the second shared key control unit cannot use predetermined data encrypted with a key other than keys included in the tree structure having the predetermined key as a parent key. The predetermined data is thus protected from malicious use.

In the information processing device according to claim 10 of the present invention, the key included in a tree structure having, as a parent key, the predetermined key included in the first encryption key group includes, as attribute information, key use restriction information that is an expected hash value of a second stakeholder environment that is managed by the second stakeholder and has not been tampered with, the second tamper-resistant module stores environment information that is an actual hash value of the second stakeholder environment, and when the second shared key control unit issues the key sharing request to the first shared key control unit to use the key included in a tree structure having, as a parent key, the predetermined key included in the first encryption key group, the first shared key control unit compares the key use restriction information and the environment information, permitting use of the key only when comparison results are positive.

In an information processing device with the above structure, the first shared key control unit compares the key use restriction information, which is generated from a second stakeholder environment that has not been tampered with, and the environment information, actually obtained from the second stakeholder environment, permitting use of the key only when comparison results are positive. As a result, if the second stakeholder environment has been tampered with or revoked, the comparison results indicate a discrepancy, and the second shared key control unit cannot use the predetermined key to decrypt the key included in a tree structure having the predetermined key as a parent key. Therefore, the second shared key control unit cannot decrypt the predetermined data that is encrypted with the key included in the tree structure having the predetermined key as a parent key. The predetermined data is thus protected from malicious use.

In the information processing device according to claim 11 of the present invention, when, in a first stakeholder environment managed by the first stakeholder, a second stakeholder environment managed by the second stakeholder is detected as having been tampered with or revoked, the first shared key control unit prevents the second shared key control unit from using the key included in a tree structure having the predetermined key as a parent key by rewriting the key use restriction information.

In an information processing device with the above structure, when a first stakeholder environment managed by the first stakeholder detects that the second stakeholder environment has been tampered with or revoked, the first shared key control unit prevents the second shared key control unit from using the key included in a tree structure having the predetermined key as a parent key by rewriting the key use restriction information. As a result, the second shared key control unit cannot use the predetermined key to decrypt the key included in a tree structure having the predetermined key as a parent key. Therefore, the second shared key control unit cannot decrypt the predetermined data that is encrypted with the key included in the tree structure having the predetermined key as a parent key. The predetermined data is thus protected from malicious use.

In the information processing device according to claim 12 of the present invention, data encrypted with the key included in a tree structure having, as a parent key, the predetermined key included in the first encryption key group includes, as attribute information, encrypted data use restriction information that is an expected hash value of a second stakeholder environment that is managed by the second stakeholder and has not been tampered with, the second tamper-resistant module stores environment information that is an actual hash value of the second stakeholder environment, and when the second shared key control unit issues a request to the first shared key control unit for decryption of data encrypted with the key included in a tree structure having, as a parent key, the predetermined key included in the first encryption key group, the first shared key control unit compares the encrypted data use restriction information and the environment information, decrypting the encrypted data only when comparison results are positive.

In an information processing device with the above structure, the first shared key control unit compares the key use restriction information, which is generated from a second stakeholder environment that has not been tampered with, and the environment information, actually obtained from the second stakeholder environment, decrypting the encrypted data only when comparison results are positive. As a result, if the second stakeholder environment has been tampered with or revoked, the comparison results indicate a discrepancy, and the second shared key control unit cannot use the predetermined key to decrypt the encrypted data that is encrypted with the key included in the tree structure having the predetermined key as a parent key. The encrypted data is thus protected from malicious use.

In the information processing device according to claim 13 of the present invention, when, in a first stakeholder environment managed by the first stakeholder, a second stakeholder environment managed by the second stakeholder is detected as having been tampered with or revoked, the first shared key control unit prevents the second shared key control unit from using encrypted data encrypted with the key included in a tree structure having the predetermined key as a parent key by rewriting the encrypted data use restriction information.

In an information processing device with the above structure, when a first stakeholder environment managed by the first stakeholder detects that the second stakeholder environment has been tampered with or revoked, the first shared key control unit prevents the second shared key control unit from using encrypted data encrypted with a key included in a tree structure having the predetermined key as a parent key by rewriting the encrypted data use restriction information. As a result, the second shared key control unit cannot use the predetermined key to perform decryption processing that uses the key included in the tree structure having the predetermined key as a parent key. The predetermined data is thus protected from malicious use.

In the information processing device according to claim 14 of the present invention, when booting the first stakeholder environment and the second stakeholder environment via a secure boot, the first shared key control unit detects whether the second stakeholder environment has been tampered with or revoked, the secure boot being a function to boot only an environment that has not been tampered with by checking integrity of the environment.

In an information processing device with the above structure, the first shared key control unit detects that the second stakeholder environment has been tampered with or revoked when booting the first stakeholder environment and the second stakeholder environment via a secure boot. The secure boot is a function to boot only an environment that has not been tampered with by checking integrity of the environment. It is thus determined whether the second shared key control unit has been attacked from the outside.

In the information processing device according to claim 15 of the present invention, the first shared key control unit detects that the second stakeholder environment has been tampered with or revoked upon receiving notification from an external server that the second stakeholder environment has been tampered with or revoked.

In an information processing device with the above structure, the first shared key control unit detects that the second shared key control unit has been attacked upon receiving notification from an external server that the second shared key control unit has been attacked.

In a method of managing encryption keys in an information processing device according to claim 16 of the present invention, the information processing device is provided with a first shared key control unit corresponding to a first stakeholder; a second shared key control unit corresponding to a second stakeholder; a first tamper-resistant module that corresponds to the first stakeholder and is operable to manage, in a tree structure, a first encryption key group that includes a plurality of keys; a data storage unit storing predetermined data encrypted using a key included in the first encryption key group; and a second tamper-resistant module that corresponds to the second stakeholder and is operable to manage, in a tree structure, a second encryption key group that includes a plurality of keys. The method includes: receiving, by the first shared key control unit, a key sharing request from the second shared key control unit directed at the first encryption key group; determining, by the first shared key control unit, whether the second stakeholder depends on the first stakeholder; searching, by the first shared key control unit, the keys included in the first encryption key group for a predetermined key that is copyable to the second encryption key group and copying the predetermined key to the second encryption key group when the determination is positive; and encrypting, by the second shared key control unit, the predetermined key using a key included in the second encryption key group and storing the encrypted predetermined key in the second encryption key group in order to share a key that is included in the first encryption key group at a lower level of the tree structure than the predetermined key.

In a computer program used in management of keys in an information processing device according to claim 17 of the present invention, the information processing device is provided with a first shared key control unit corresponding to a first stakeholder; a second shared key control unit corresponding to a second stakeholder; a first tamper-resistant module that corresponds to the first stakeholder and is operable to manage, in a tree structure, a first encryption key group that includes a plurality of keys; a data storage unit storing predetermined data encrypted using a key included in the first encryption key group; and a second tamper-resistant module that corresponds to the second stakeholder and is operable to manage, in a tree structure, a second encryption key group that includes a plurality of keys, wherein the computer program causes a computer to perform processing to determine whether the second stakeholder depends on the first stakeholder when the first shared key control unit receives, from the second shared key control unit, a key sharing request directed at the first encryption key group, search in the first encryption key group for a predetermined key that is copyable to the second encryption key group and copy the predetermined key to the second encryption key group when the determination is positive, and in the second shared key control unit, encrypt the predetermined key using a key included in the second encryption key group and store the encrypted predetermined key in the second encryption key group in order to share a key that is included in the first encryption key group at a lower level of the tree structure than the predetermined key.

In an integrated circuit used in an information processing device and comprising an information processing unit and a memory according to claim 18 of the present invention, the information processing device includes: a first shared key control unit corresponding to a first stakeholder; a second shared key control unit corresponding to a second stakeholder; a first tamper-resistant module that corresponds to the first stakeholder and is operable to manage, in a tree structure, a first encryption key group that includes a plurality of keys; a data storage unit storing predetermined data encrypted using a key included in the first encryption key group; and a second tamper-resistant module that corresponds to the second stakeholder and is operable to manage, in a tree structure, a second encryption key group that includes a plurality of keys, and the memory stores a processing program that causes the information processing unit to determine whether the second stakeholder depends on the first stakeholder when the first shared key control unit receives, from the second shared key control unit, a key sharing request directed at the first encryption key group, search in the first encryption key group for a predetermined key that is copyable to the second encryption key group and copy the predetermined key to the second encryption key group when the determination is positive, and in the second shared key control unit, encrypt the predetermined key using a key included in the second encryption key group and store the encrypted predetermined key in the second encryption key group in order to share a key that is included in the first encryption key group at a lower level of the tree structure than the predetermined key.

In the information processing device according to claim 19 of the present invention, the first shared key control unit decrypts the predetermined key using a key that is included in the first encryption key group and is used to encrypt the predetermined key, re-encrypts the decrypted predetermined key using a key included in the second encryption key group, and copies the re-encrypted key to the second encryption key group.

The following describes embodiments of the present invention with reference to the drawings.

### (Embodiment 1)

The following describes Embodiment 1 of the present invention. The TPM in Embodiment 1 is described as a tamper-resistant module having the functions of a Mobile Trusted Module (MTM) as specified by the Mobile Phone Working Group of the TCG.

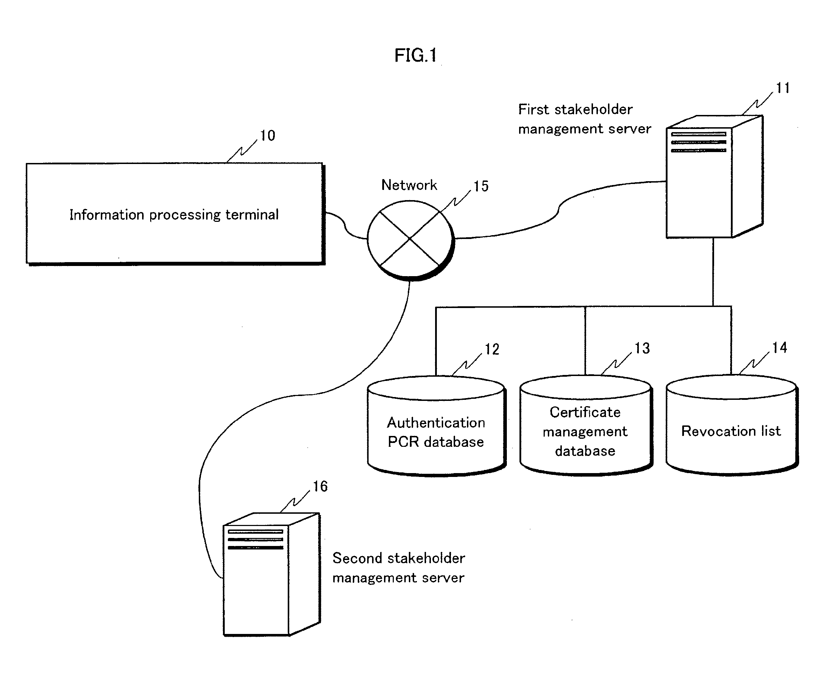

### <Fig. 1: System Overview>

First, multi-stakeholders are described using a cellular phone as an example. Multiple stakeholders exist in a cellular phone, such as a device maker, carrier, application service provider, and user. Stakeholders have rights to certain items.

The items to which stakeholders have rights are, for example, International Mobile Equipment Identity (IMEI) for the device maker, Subscriber Identification Module (SIM) related information for the carrier, service provision data for the application service provider, an address book for a user, etc.

A multi-stakeholder model is a model for various stakeholders to securely use items to which they have rights by individually allocating TPMs used by the various stakeholders.

Fig. 1 shows a system overview of a multi-stakeholder model.

The information processing terminal 10 is a mobile terminal provided with an MTM. In the example described in Embodiment 1, two stakeholders exist in the information processing terminal 10: a first stakeholder and a second stakeholder. Note that, as described above, there may be more than two stakeholders. Furthermore, the information processing terminal may be a cellular phone, a mobile terminal such as a PDA, or a standing electronic device, such as a TV, DVD/BD player, STB, etc.

A first stakeholder management server 11 is a server managed by the stakeholder providing the first stakeholder environment. The first stakeholder management server 11 manages an authentication PCR database 12, a certificate management database 13, and a revocation list 14.

The authentication PCR database 12 is a database used when the first stakeholder management server 11 performs attestation processing to verify the authentication of the information processing terminal 10. The authentication PCR database 12 stores expected values of PCRs, which are environment information on an authentic information processing terminal 10.

During attestation, the first stakeholder management server 11 compares the PCR value sent from the information processing terminal 10 with the value recorded in the authentication PCR database 12, determining the information processing terminal 10 to be authentic when these values match and providing appropriate services.

The certificate management database 13 is a database of software certificates provided by the first stakeholder. If updating of a module of the first stakeholder is necessary, the module to be updated and a certificate of the update module are transmitted. The certificate of the update module is also managed in the certificate management database 13.

The revocation list 14 is a database recording a list of stakeholders for revocation. The revocation list 14 is transmitted from the first stakeholder management server 11 to the information processing terminal 10 and is managed in the information processing terminal 10 while being protected in an integral state.

Note that the revocation list 14 is described as a blacklist that lists information on stakeholders to be revoked, but instead, a whitelist listing information on valid stakeholders may be used.

Note also that, in Fig. 1, the authentication PCR database 12, certificate management database 13, and revocation list 14 are all managed by the first stakeholder management server 11, but these may be managed by a plurality of management servers.

A second stakeholder management server 16 is a server managed by the stakeholder providing the second stakeholder environment. While not shown in Fig. 1, like the first stakeholder management server 11, the second stakeholder also manages the authentication PCR database 12, certificate management database 13, and revocation list 14.

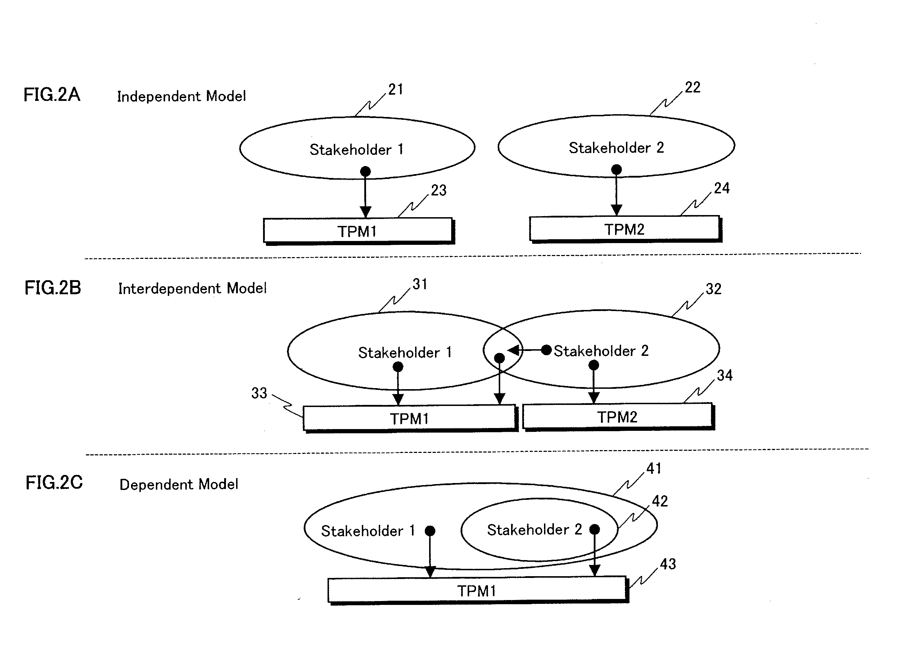

### <Figs. 2A-C: Trust Models in Multi-Stakeholder Models>

Figs. 2A-C show trust models in multi-stakeholder models.

Three models are defined as trust models. While not shown in Figs. 2A-C, stakeholders manage items to which they have rights, and the item to which a stakeholder has rights is accessed securely using the TPM assigned to the stakeholder. The following describes the three models.

Fig. 2A shows an Independent Model. In this model, stakeholders are not in a dependency relationship based on trust. For example, in this model, stakeholder 1 (21) uses TPM1 (23), and stakeholder 2 (22) uses TPM2 (24).

Fig. 2B shows an Interdependent Model. In this model, stakeholders are in a partial dependency relationship. For example, in this model, stakeholder 1 (31) uses TPM1 (33), and stakeholder 2 (32) uses TPM2 (34). Such use is the same as in the Independent Model, but as shown in Fig. 2B, a region of partial overlap exists. This is a conceptual representation of how, apart from TPM2 (34), stakeholder 2 (32) also uses the functions of TPM1 (33).

For example, in the case of a cellular phone, if stakeholder 2 (32) is a carrier, and stakeholder 1 (31) is a device maker, then the carrier accesses the IMEI, to which the device maker has rights. In this case, stakeholder 2 (32) issues an IMEI access request to stakeholder 1 (31), and stakeholder 2 (32) accesses TPM1 (33) via stakeholder 1 (31).

Fig. 2C shows a Dependent Model. In this model, a stakeholder is completely dependent on another stakeholder. Stakeholder 1 (41) uses TPM1 (43), and stakeholder 2 (42) also uses TPM1 (43) in this model. In the case of a cellular phone, if stakeholder 2 is a carrier, and stakeholder 1 is a device maker, both the IMEI, to which the device maker has rights, and also the SIM information, to which the carrier has rights, are securely protected using the functions of the TPM1 (43).

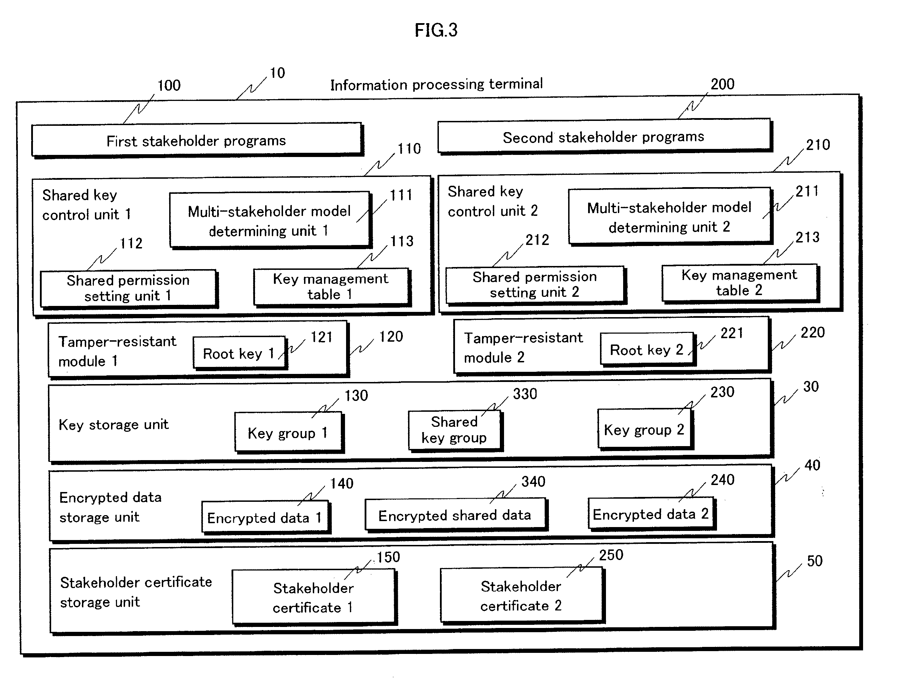

### <Fig. 3: Information Processing Terminal

Fig. 3 shows the overall structure of the information processing terminal 10 in a multi-stakeholder model.

The information processing terminal 10 is composed of first stakeholder programs (100), second stakeholder programs (200), shared key control units (110, 210), tamper-resistant modules (120, 220), key storage unit 30, encrypted data storage unit 40, and stakeholder certificate storage unit 50. While not shown in the figures, the information processing terminal 10 also has hardware including a CPU, I/O device, volatile memory such as RAM, non-volatile memory such as ROM or Flash memory, etc.

### <Stakeholder Programs>

The first stakeholder programs (100) are a group of programs provided by the first stakeholder and distributed by the first stakeholder management server 11. Only a program in the first stakeholder programs (100) whose authentication is verified by the secure boot function of tamper-resistant module (120) is booted.

The second stakeholder programs (200) are a group of programs provided by the second stakeholder and distributed by the second stakeholder management server 16. Only a program in the second stakeholder programs (200) whose authentication is verified by the secure boot function of tamper-resistant module (220) is booted.

Note that specifications of a secure boot are recited in Non-Patent Literature 4, and thus a description thereof is omitted.

### <Shared Key Control Units (110, 210)>

The shared key control unit 1 (110) controls use of key group 1 (130) and the shared key group (330). Shared key control unit 1 (110) is composed of multi-stakeholder model determining unit 1 (111), shared permission setting unit 1 (112), and key management table 1 (113).

When a stakeholder other than stakeholder 1 requests to set a shared key in key group 1 (113) or shared key (330) managed by shared key control unit 1 (110), multi-stakeholder model determining unit 1 (111) determines whether the requesting stakeholder should be allowed to share the key by referring to the stakeholder certificates (150, 250) stored in the stakeholder certificate storage unit 50.

Shared permission setting unit 1 (112) performs key processing necessary when setting various shared keys, such as setting a key belonging to key group 1 (130) as a shared key in the shared key group (330), generating a new key, and controlling migration of a key. Shared permission setting unit 1 (112) and tamper-resistant module 1 (120) cooperate to perform this key processing.

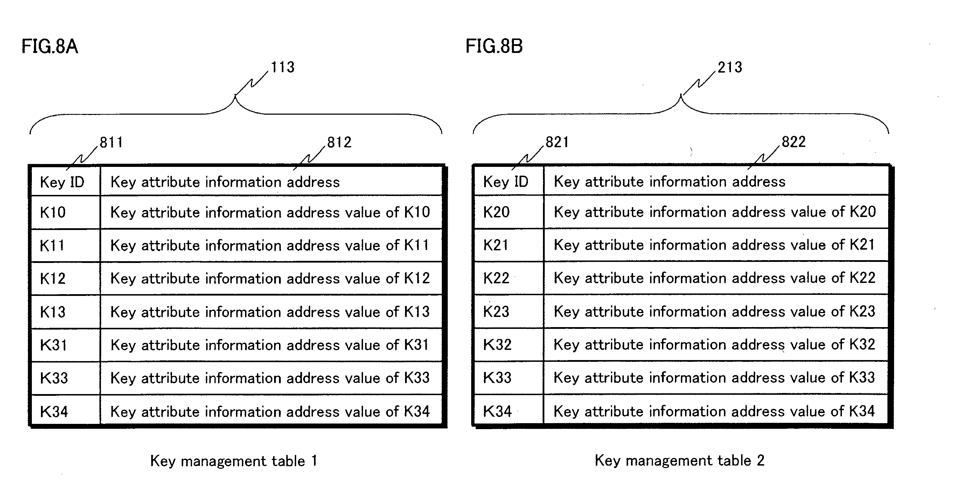

Management table 1 (113) lists information necessary for shared key control unit 1 (110) to access key group 1 (130) and the shared key group (330). Management table 1 (113) is described below with reference to Figs. 8A and 8B.

Shared key control unit 2 (210) controls use of key group 2 (230) and the shared key group (330). Shared key control unit 2 (210) is composed of multi-stakeholder model determining unit 2 (211), shared permission setting unit 2 (212), and key management table 2 (213).

When a stakeholder other than stakeholder 2 requests to set a shared key in key group 2 (230) or the shared key group (330) managed by the shared key control unit 2 (210), multi-stakeholder model determining unit 2 (211) determines whether the requesting stakeholder should be allowed to share the key by referring to the stakeholder certificates (150, 250) stored in the stakeholder certificate storage unit 50.

Shared permission setting unit 2 (212) performs key processing necessary when setting various shared keys, such as setting a key belonging to the key group 2 (230) as a shared key in the shared key group (330), generating a new key, and controlling migration of a key. Shared permission setting unit 2 (212) and tamper-resistant module 2 (220) cooperate to perform this key processing.

Management table 2 (213) lists information necessary to access key group 2 (230) and the shared key group (330). Management table 2 (213) is described below with reference to Figs. 8A and 8B.

Note that shared key control unit 1 (110) and shared key control unit 2 (210) may each be implemented as the first stakeholder programs and the second stakeholder programs. By doing so, shared key control unit 1 (110) and shared key control unit 2 (210) are booted after integrity is verified by the secure boot defined by the TCG mobile specifications.

### <Tamper-Resistant Modules (120, 220)>

Tamper-resistant module 1 (120) is described as being implemented to have MTM functions. Accordingly, during secure processing such as encryption/decryption, signature generation/verification, TPM function processing, etc., and when controlling keys, tamper-resistant module 1 (120) is used by the first stakeholder programs, shared key control unit 1 (110), etc. Further more, tamper-resistant module 1 (120) stores root key 1 (121) in non-volatile memory in tamper-resistant module 1. Root key 1 (121) corresponds to the SRK in the TCG.

Similarly, tamper-resistant module 2 (220) is described as being implemented to have MTM functions. Accordingly, during secure processing such as encryption/decryption, signature generation/verification, TPM function processing, etc., and when controlling keys, tamper-resistant module 2 (220) is used by the second stakeholder programs, shared key control unit 2 (210), etc. Furthermore, tamper-resistant module 2 (220) stores root key 2 (221) in non-volatile memory in tamper-resistant module 2 (220). Root key 2 (221) corresponds to the SRK in the TCG.

### <Key Storage Unit 30>

Key group 1 (130) and the shared key group (330) are formed as the node keys in hierarchical tree structures having root key 1 (121) at the root. This corresponds to a key tree structure for implementing the Protected Storage function of the TCG.

Key group 1 (130) has a tree structure composed of one or more keys. The individual keys in key group 1 (130) are used by shared key control unit 1 (110) via tamper-resistant module 1 (120) for encryption/decryption and signature generation/verification.

Key group 2 (230) and the shared key group (330) are formed as the node keys in hierarchical tree structures having root key 2 (221) at the root. This corresponds to a key tree structure for implementing the Protected Storage function of the TCG.

Key group 2 (230) has a tree structure composed of one or more keys. The individual keys in key group 2 (230) are used by shared key control unit 2 (210) via tamper-resistant module 2 (220) for encryption/decryption and signature generation/verification.

The shared key group (330) also has a tree structure composed of one or more keys. The individual keys in the shared key group (330) are used by shared key control unit 1 (110) via tamper-resistant module 1 (120) for encryption/decryption and signature generation/verification. The individual keys in the shared key group (330) are also used by shared key control unit 2 (210) via tamper-resistant module 2 (220) for encryption/decryption and signature generation/verification.

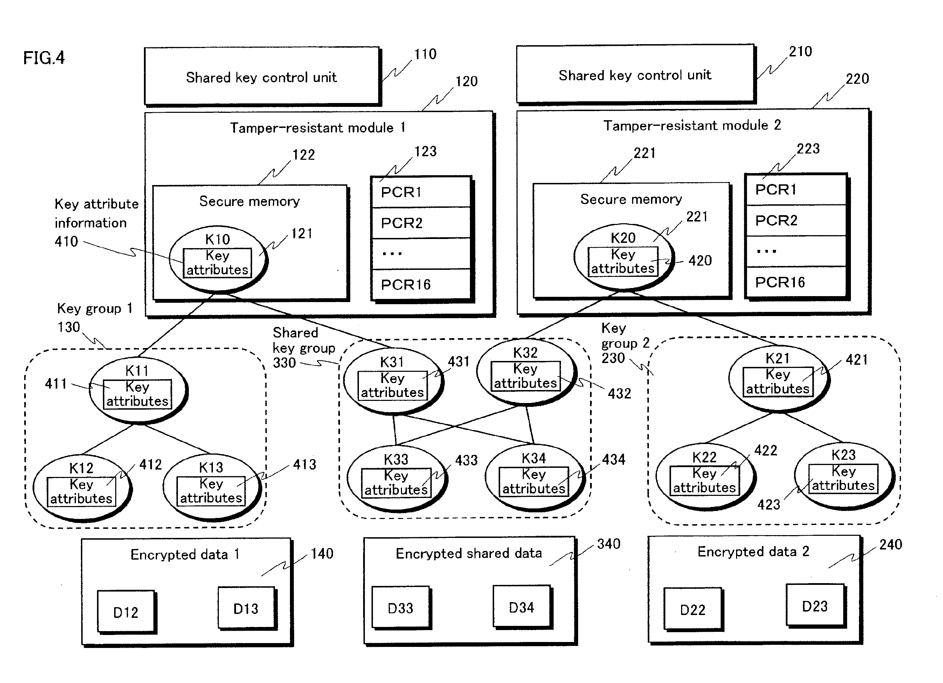

The shared key group (330) is composed of shared keys and parent keys for the shared keys, the parent keys serving to protect the shared keys. The parent keys for the shared keys are composed of keys used only by shared key control unit 1 (110) via tamper-resistant module 1 (120), and keys used only by shared key control unit 2 (210) via tamper-resistant module 2 (220). Key group 1 (130), key group 2 (230), and the shared key group (330) are stored in the key storage unit 30. The structures of key group 1 (130), key group 2 (230), and the shared key group (330) are described in greater detail with reference to Fig. 4 through Fig. 7.

### <Encrypted Data Storage Unit 40>

Encrypted data 1 (140) is data encrypted with a key in key group 1 (130). The encrypted shared data (340) is data encrypted with the shared key group 330. Encrypted data 2 (240) is data encrypted with key group 2 (230).

Encrypted data 1 (140), encrypted data 2 (240), and encrypted shared data (340) are stored in the encrypted data storage unit 40. The encrypted data storage unit 40 is composed of non-volatile memory such as a HDD, flash memory, etc.

Note that, in Fig. 3, encrypted data 1 (140), encrypted data 2 (240), and the encrypted shared data (340) have been described as encrypted data, but these pieces of data are not limited to being encrypted. These pieces of data may be signed with the respective keys.

### <Stakeholder Certificate Storage Unit 50>

The stakeholder certificate storage unit 50 stores stakeholder certificate 1 (150) and stakeholder certificate 2 (250). The stakeholder certificate storage unit 50 is implemented by non-volatile memory and is managed with its integrity protected.

Stakeholder certificate 1 (150) indicates that the first stakeholder programs, shared key control unit 1 (110), and tamper-resistant module 1 (120) are provided by an authentic stakeholder.

Stakeholder certificate 2 (250) indicates that the second stakeholder programs, shared key control unit 2 (210), and tamper-resistant module 2 (220) are provided by an authentic stakeholder.

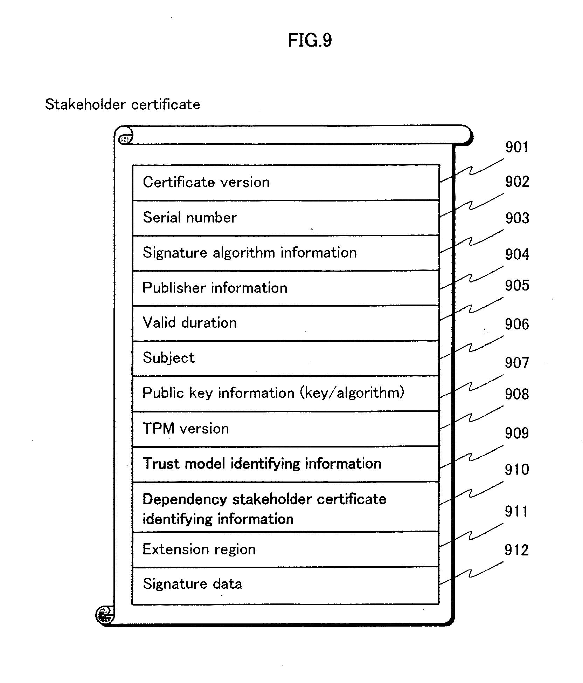

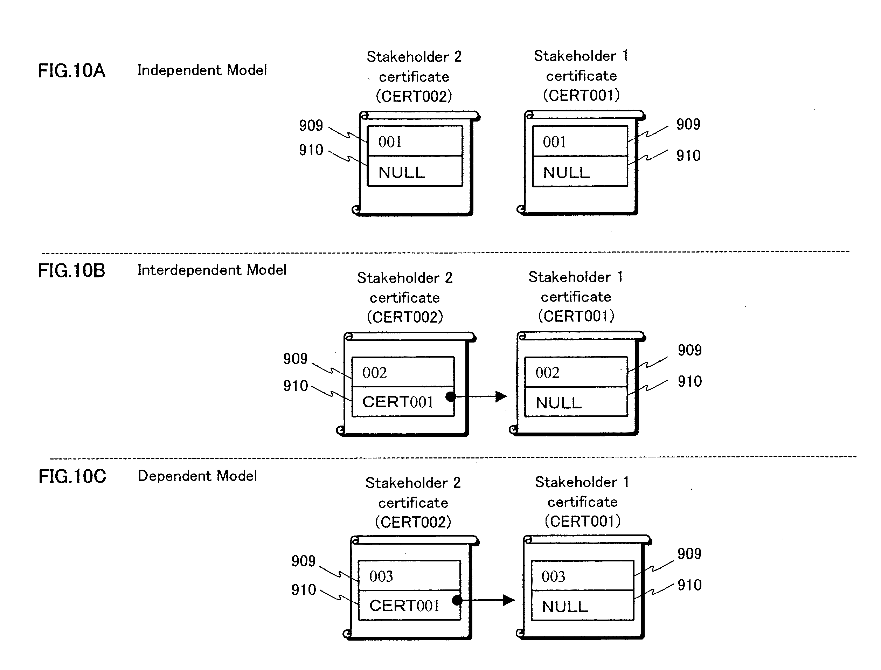

The stakeholder certificates (150, 250) list information to identify stakeholders in a dependency relationship. Details, such as on the structure of the stakeholder certificates (150, 250), are described below with reference to Fig. 9 and Figs. 10A-10C.

### <Fig. 4: Key Tree Structure of Shared Keys>

Fig. 4 shows the tree structure of key group 1 (130), key group 2 (230), and the shared key group (330). Note that a description of structural elements already described in Fig. 3 is omitted. In Fig. 4, the tamper-resistant module (120, 220), key group 1 (130), key group 2 (230), and shared key group (330) in Fig. 3 are shown in more detail.

Tamper-resistant module 1 (120) is provided with a secure memory (122), which is protected from malicious access from outside tamper-resistant module 1 (120), and with 16 PCRs (123). Root key 1 (121) is securely stored in the secure memory (122).

Tamper-resistant module 2 (220) is provided with a secure memory (222), which is protected from malicious access from outside tamper-resistant module 2 (220), and with 16 PCRs (223). Root key 2 (221) is securely stored in the secure memory (222).

Note that the PCRs (120, 220) are registers called Platform Configuration Registers in which integrity values generated by a TPM_Extend command in the TCG are stored. Note that the number of PCRs is not limited to 16; the number may be greater. In Embodiment 1, a larger number of PCRs than in the TCG specifications is provided.

Hereinafter, root key 1 (121) is described as K10, and root key 2 (221) as K20.

Key group 1 (130) is composed of three keys (K11, K12, and K13). K11 forms part of a tree structure as a child key of K10, and K11 is encrypted by K10, K12 and K13 form part of a tree structure as child keys of K11, and K12 and K13 are encrypted by K11.

Key group 2 (230) is composed of three keys (K21, K22, and K23). K21 forms part of a tree structure as a child key of K20, and K21 is encrypted by K20. K22 and K23 form part of a tree structure as child keys of K21, and K22 and K23 are encrypted by K21.

The shared key group (330) is composed of four keys (K31, K32, K33, and K34). K31 forms part of a tree structure as a child key of K10, and K31 is encrypted by K10. Accordingly, K31 is only used by shared key control unit 1 (110) via tamper-resistant module 1 (120). This is because K31 is encrypted by K10, and therefore to use the key value of K31, K31 has to be decrypted by K10.

On the other hand, K32 forms part of a tree structure as a child key of K20, and K32 is encrypted by K20. Accordingly, K32 is only used by shared key control unit 2 (210) via tamper-resistant module 2 (220). This is because K32 is encrypted by K20, and therefore to use the key value of K32, K32 has to be decrypted by K20.

Next, K33 and K34 are described. K33 forms part of a tree structure as a child key of K31 and K32, and K34 forms part of a tree structure as a child key of K31 and K32.

K33 and K34 are shared keys used by the shared key control unit 1 (110) via tamper-resistant module 1 (120) for encryption/decryption and signature generation/verification, and also used by the shared key control unit 2 (210) via tamper-resistant module 2 (220) for encryption/decryption and signature generation/verification. Accordingly, K33 and K34 are used by both tamper-resistant module 1 (120) and tamper-resistant module 2 (220) as described above.

In order to do so, K31 and K32 are set to the same key value. Since in the format of this tree structure, parent keys encrypt child keys, if K31 and K32 are the same key value, then even if the root keys differ, as do K10 and K20, K33 and K34 can be decrypted.

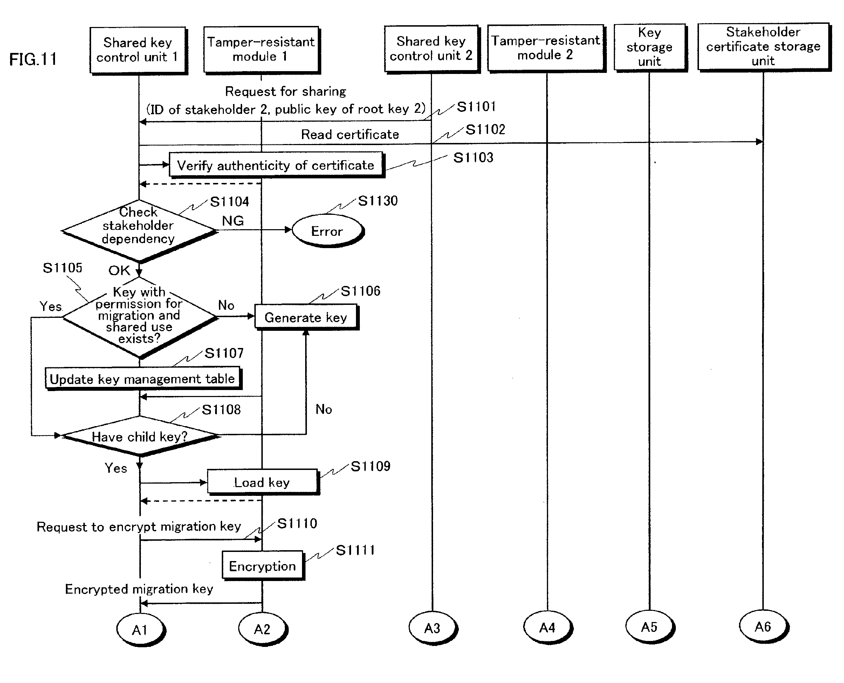

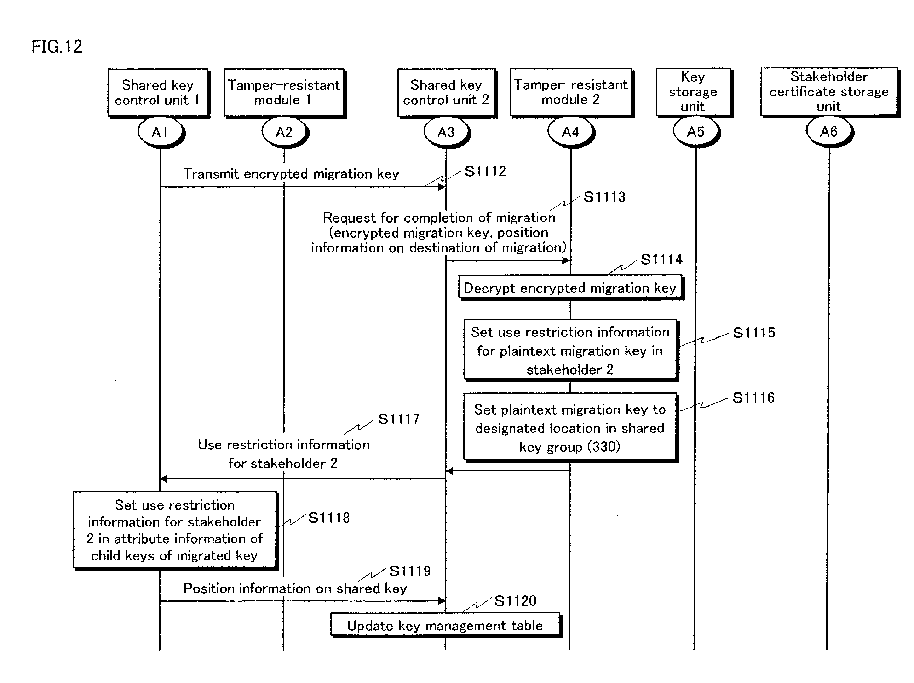

The migration function in the TCG is used as a method to set K31 and K32 to the same key value. The specific processing flow is described below with reference to Fig. 11 and Fig. 12, and thus a description is omitted here.

Encrypted data 1 (140) is composed of encrypted data D12 and D13. D12 is data encrypted by K12, and D13 is data encrypted by K13. Note that the encrypted data in encrypted data 1 (140) is not limited in this way. This data may be signed data using K12 and K13 as signature keys. Also, there may be a plurality of pieces of data encrypted by K12 and a plurality of pieces of data encrypted by K13.

Encrypted data 2 (240) is composed of encrypted data D22 and D23. D22 is data encrypted by K22, and D23 is data encrypted by K23. Note that the encrypted data in encrypted data 2 (240) is not limited in this way. This data may be signed data using K22 and K23 as signature keys. Also, there may be a plurality of pieces of data encrypted by K22 and a plurality of pieces of data encrypted by K23.

Encrypted shared data (340) is composed of encrypted shared data D33 and D34. D33 is data encrypted by K33, and D34 is data encrypted by K34. Note that the encrypted data in encrypted shared data (340) is not limited in this way. This data may be signed data using K33 and K34 as signature keys. Also, there may be a plurality of pieces of data encrypted by K33 and a plurality of pieces of data encrypted by K34.

Note that the number of keys in key group 1 (130), key group 2 (230), and the shared key group 330, as well as the number of pieces of data in encrypted data 1 (140), encrypted data 2 (240), and the encrypted shared data (340) are not limited to the example shown in Fig. 4. Also, the key tree structure having K 10 and K20 at the roots is a binary tree, but may also be a ternary tree, or an N branch tree (N being an integer).

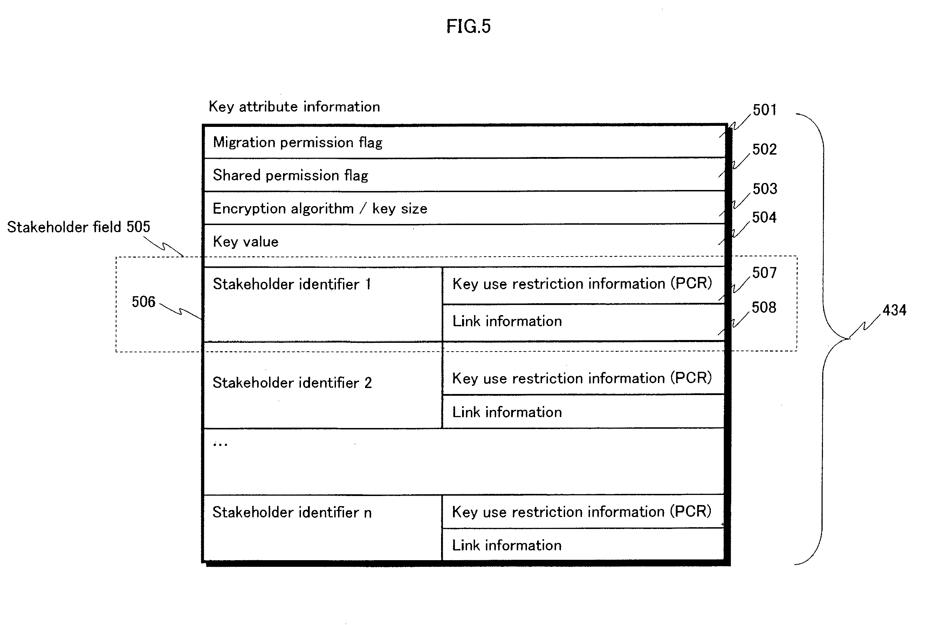

### <Fig. 5: Key Attribute Information>

The key values of root key 1 (121), root key 2 (221), key group 1 (130), key group 2 (230), and the shared key group (330) are a component of key attribute information.

For example, the key value of K10, which is root key 1 (121), is recorded in key attribute information 410. The key value of K20, which is root key 2 (221), is recorded in key attribute information 420. The key value of K11, which is a key in key group 1 (130), is recorded in key attribute information 411. The key value of K21, which is a key in key group 2 (230), is recorded in key attribute information 421. The key value of K31, which is a key in the shared key group (330), is recorded in key attribute information 431. Other key values are similarly recorded, and thus a description thereof is omitted.

Along with the value of a key, this key attribute information records information indicating key attributes in the same data structure.

Fig. 5 shows the structure of key attribute information. Key attribute information 434 is provided with the following: a migration permission flag 501; a shared permission flag 502; a field 503 indicating an encryption algorithm, which is information for identifying a key algorithm, and the size of a key value; and a key value 504.

The migration permission flag 501 is flag information indicating whether migration of the key is permitted. If this flag is "0", migration is not permitted, and if this flag is "1", migration is permitted.

The shared permission flag 502 is flag information indicating whether the key can be used as a shared key. If this flag is "0", permission is denied, and if this flag is "1", permission is granted.

The attribute information 410 further includes one or more stakeholder fields 505, which store information on a plurality stakeholders when the key can be accessed by a plurality of stakeholders as a shared key. If the key can be accessed by a plurality of stakeholders, the stakeholder fields 505 correspond in number to the accessing stakeholders.

In the key attribute information 434 shown in Fig. 5, stakeholder fields 505 are set for stakeholder identifiers 1 through n.

In Fig. 4, K34 can be accessed by stakeholder 1 and stakeholder 2, and thus in this case there are two stakeholder fields 505.

The stakeholder fields 505 each include a stakeholder identifier 506, key use restriction information 507 indicating restricted use of the key, and link information 508.

The key use restriction information 507 is the PCR value expected to be recorded in the PCRs (123, 223) provided in the tamper-resistant modules when using the key. The key use restriction information 507 serves to restrict use of the key. The key use restriction information is compared with the actual value recorded in the PCRs (123, 223) provided in the tamper-resistant modules, and use of the key is allowed only when the actual PCR value and the expected PCR value match.

The link information 508 identifies the parent key of each key, or identifies the child keys of each key.

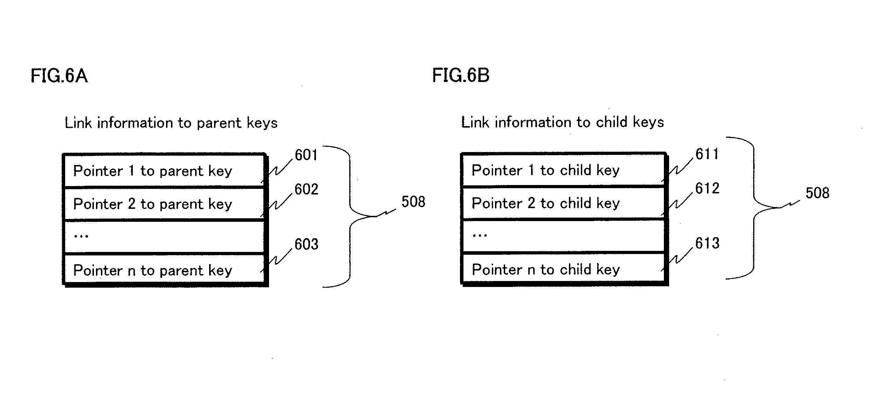

### <Figs. 6A and 6B: Link Information>

The following describes the link information 508 with reference to Figs. 6A and 6B.

The link information 508 in Fig. 6A identifies a parent key for each key. If a plurality of parent keys exist, pointers (601, 602, 603) to the parent keys are stored in the link information 508, as shown in the figure.

The link information 508 in Fig. 6B identifies a child key for each key. If a plurality of child keys exist, pointers (611, 612, 613) to the child keys are stored in the link information 508, as shown in the figure.

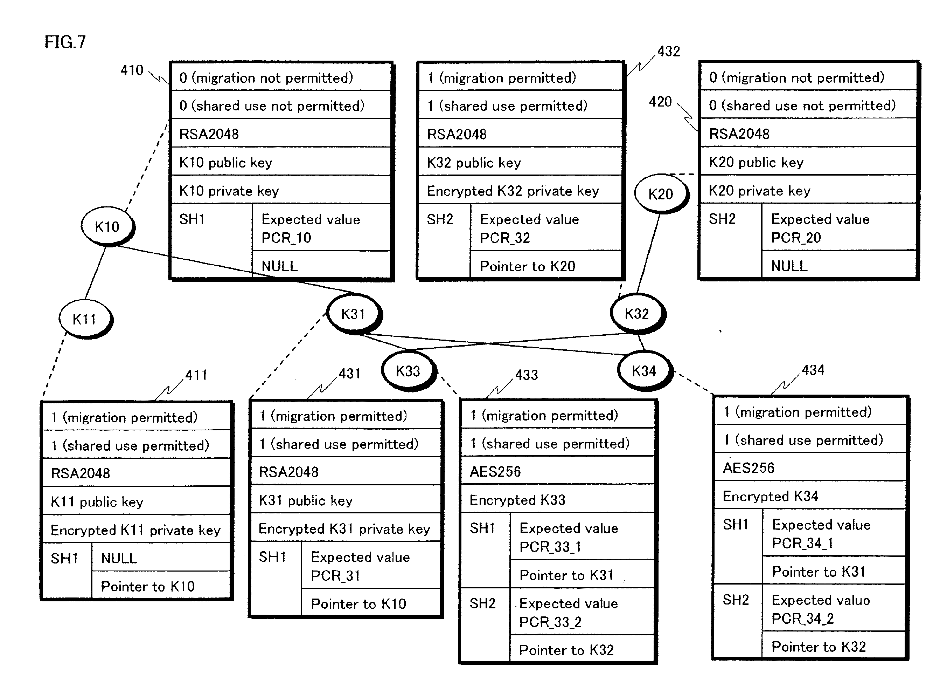

### <Fig. 7: Example of Key Attribute Information>

Fig. 7 shows an example of the relationship between a key tree structure and key attribute information. In Fig. 7, a part of the keys shown in Fig. 4 is extracted and described.

In the key attribute information 410 for root key 1 (K10), permission is not granted for migration or shared use, the encryption algorithm is RSA, and the key length is 2048 bits. Also, the key value of the public key of K10 and the key value of the private key of K10 are set in the key value 504 field.

For K10 to permit access by stakeholder 1, the stakeholder field 505 indicates the identifier "SH1" of stakeholder 1 as the stakeholder identifier 506, and PCR_10 as the expected PCR information in the key use restriction information 507. Furthermore, link information to the parent key in Fig. 6A is set in the link information 508. Since K10 is a root key, no parent key exists, and therefore the link information 508 is set to "NULL". Furthermore, since no parent key exists for K10, the key value 504 field of K10 is set to a plaintext key value.

In the key attribute information 411 for key K11 in key group 1 (130), permission is granted for migration and shared use, the encryption algorithm is RSA, and the key length is 2048 bits. Also, (i) the key value of the public key of K11 and (ii) the key value of the private key of K11 encrypted with the public key of K10 are set in the key value 504 field. For K11 to permit access by stakeholder 1, the stakeholder field 505 indicates the identifier "SH1" of stakeholder 1 as the stakeholder identifier 506. Furthermore, link information to the parent key described in Fig. 6A is listed in the link information 508. Since the parent key of K11 is K10, the link information 508 is set to "pointer information to K10". Specifically, if this pointer information refers to key attribute information 410 of K10, this pointer information may be an address or an ID. "NULL" is set as the expected PCR information in the key use restriction information 507. This value of "NULL" indicates that there is no restriction on the PCR when using the key K11.

In the key attribute information 433 for K33 in the shared key group (330), permission is granted for migration and shared use, the encryption algorithm is AES, and the key length is 256 bits. Also, the key value of K33 encrypted with the public key of either K31 or K32 is set in the key value 504 field. Since K33 is a shared key that is shared by stakeholder 1 and stakeholder 2, in the stakeholder fields 505, the stakeholder identifiers 506 are set to the identifiers "SH1" and "SH2" of stakeholder 1. As the expected PCR information, the key use restriction information 507 lists PCRs_33_1, used to restrict access by "SH1", and PCR_33_2, used to restrict access by "SH2". Furthermore, link information to the parent key described in Fig. 6A is listed in the link information 508. Since K33 is a shared key with K31 and K32 as parent keys, "pointer information to K31" and "pointer information to K32" are listed in the link information 508.

Other keys (K20, K31, K32, and K34) are similar, and thus a description thereof is omitted.

Note that in Embodiment 1, the encryption algorithm is RSA or AES, but the encryption algorithm is not limited in this way. In a public key encryption scheme, elliptic curve cryptography may be used instead of RSA, and in a symmetric key encryption scheme, an algorithm other than AES may be used. The key length is also not limited to the example in Embodiment 1. Note also that if a parent key uses an algorithm in a public key encryption scheme, the child key is encrypted with the public key of the parent key. On the other hand, if the parent key uses an algorithm in a symmetric key encryption scheme, the child key is encrypted with the parent key itself. If the child key uses an algorithm in a public key encryption scheme, the private key of the child key is encrypted, and if the child key uses an algorithm in a symmetric key encryption scheme, the child key itself is encrypted.

Note that the key attribute information 434 includes a key value 504, but the key value 504 and other attribute information may be constituted as other data.

### <Figs. 8A and 8B: Key Management Table>

Next, the key management table is described.

Management table 1 (113) is a table used by shared key control unit 1 (110). Management table 1 (113) is composed of key IDs 811 and key attribute information addresses 812. The key IDs 811 are identifiers for identifying each key. The key attribute information addresses 812 are set to the address values in which key attribute information corresponding to each key ID 811 is stored. By using these two pieces of information, shared key control unit 1 (113) accesses a desired key.

Management table 2 (213) is a table used by shared key control unit 2 (210). Management table 2 (213) is composed of key IDs 821 and key attribute information addresses 822. The key IDs 821 are identifiers for identifying each key. The key attribute information addresses 822 are set to the address values in which key attribute information corresponding to each key ID 821 is stored. By using these two pieces of information, shared key control unit 2 (213) accesses a desired key.

In this context, keys K33 and K34, which are set as shared keys, are registered in both key management table I (113) and key management table 2 (213).

### <Fig. 9: Stakeholder Certificate>

Next, stakeholder certificates are described with reference to Fig. 9. Stakeholder certificate 1 (150) and stakeholder certificate 2 (250) have entirely the same format. Specifically, format X.509 is used.

A stakeholder certificate (TPM certificate) is composed of a certificate version 901 indicating version X.509, a serial number 902 to which a unique value is allocated by the publisher, signature algorithm information 903 indicating a signature algorithm used for signature verification of the certificate, publisher information 904, a valid duration 905 of the certificate, a subject 906 indicating the recipient of the certificate, public key information 907 indicating the key value and public key algorithm, a TPM version 908, trust model identifying information 909, dependency stakeholder certificate identifying information 910, an extension region 911, and signature data 912 for these pieces of data.

The extension region 911 may list information related to a manufacturing process such as CRL or IS090000, security related information such as EAL or other shared criteria, or conditions on function control and the content of such function control.

In Embodiment 1, a trust model is defined using trust model identifying information 909 and dependency stakeholder certificate identifying information 910. The following describes these structures in detail.

Note that, while the format is X.509 in Embodiment 1, the format is not limited in this way. For example, the format of a RIM certificate defined in MTM specifications may be used. By using a RIM certificate, certificate verification can be performed using an MTM certificate verification command. Note that details on a RIM certificate are recited in Non-Patent Literature 4, and thus a description thereof is omitted.

### <Figs. 10A-10C: Dependency Relationship Between Stakeholders>

The trust model identifying information 909 lists information for identifying three trust models: an Independent model, Interdependent model, and Dependent model.

Dependency stakeholder certificate identifying information 910 stores pointer information to a stakeholder certificate that is in a trust relationship in the trust model.

Fig. 10A is a specific example of the Independent model. In this example, the trust model identifying information indicating the Independent model is "001 ". Since in this model, stakeholder 1 and stakeholder 2 are not in a dependency relationship, the dependency stakeholder certificate identifying information 910 in CERT001 and CERT002 is set to "NULL".

Fig. 10B is a specific example of the Interdependent model. This is an example of a model in which stakeholder 2 is in a dependency relationship based on trust with respect to stakeholder 1. Therefore, the dependency stakeholder certificate identifying information 910 in CERT002 is set to "CERT001", the stakeholder that is the recipient of trusted dependency.

Fig. 10C is a specific example of the Dependent model. This is an example of a model in which stakeholder 2 is in a dependency relationship based on trust with respect to stakeholder 1. Therefore, the dependency stakeholder certificate identifying information 910 in CERT002 is set to "CERT001", the stakeholder that is the recipient of trusted dependency.

### <Figs. 11 and 12: Flowcharts for Setting Shared Keys>

Figs. 11 and 12 are flowcharts for when shared key control unit 2 (210) requests use, as a shared key, of a key in key group 1 (130) managed by shared key control unit 1 (110).

The following describes an overview of the flow using the key structure in Fig. 4 as an example. Tamper-resistant module 1 (120) migrates K31 to tamper-resistant module 2 (220). Tamper-resistant module 2 (220) then manages the migrated key K31 as K32, thus making K33 and K34, the child keys of K31, shared keys for stakeholder 1 and stakeholder 2.

Details on the flow to set the shared keys are now described with reference to Figs. 11 and 12.

First, shared key control unit 2 (210) sends an ID identifying stakeholder 2 and the public key of K20, which is root key 2, to shared key control unit 1 (110) as shared key setting request data (step S1101). In Embodiment 1, shared key control unit 2 (210) directly transmits data to shared key control unit 1 (110). However, the second stakeholder programs may issue the request in S1101 to the first stakeholder programs, the first stakeholder programs may issue a processing request to shared key control unit 1 (110), and the second stakeholder programs may issue a processing request to shared key control unit 2 (210).

Next, shared key control unit 1 (110) reads, from the stakeholder certificate storage unit 50, the stakeholder certificate corresponding to the ID received in S1101 (step S1102). In the example in Fig. 4, shared key control unit 1 (110) reads stakeholder certificate 2 (250).

Next, shared key control unit 1 (110) verifies the stakeholder certificate using tamper-resistant module 1 (120) (step S1103). As a result of verification in S1103, if the stakeholder certificate is determined not to be authentic, shared key control unit 1 (110) proceeds to error processing (S1130). As a result of verification in S1103, if the certificate is authentic, processing proceeds to step S1104.

Next, the dependency relationship between stakeholders is checked using the stakeholder certificate verified in S1103. The trust model identifying information of the stakeholder certificate is checked to confirm that the model is Interdependent or Dependent.

If the model is confirmed as Interdependent or Dependent, it is confirmed whether the stakeholder certificate of the recipient of dependency is authentic by referring to the stakeholder certificate, in the stakeholder certificate storage unit 50, referred to by the dependent stakeholder identifier (step S1104).

If the certificate is determined to be authentic, processing proceeds to S1106. Otherwise, i.e. if the trust model is Independent, or if the stakeholder certificate of the recipient of dependency is determined not to be authentic, processing proceeds to error processing (step S1130).

In the example in Fig. 4, stakeholder certificate 1 (150) and stakeholder certificate 2 (250) are used to verify whether stakeholder 2 and stakeholder 1 are in a dependency relationship.

Next, shared key control unit 1 (110) searches key group 1 (130) to determine whether keys for which migration and shared use are permitted exist (step S1105). In the example in Fig. 4, keys K10, K11, K12, K13, K31, K33, and K34 are searched.

If no such key exists, a new key for which migration and shared use are permitted is generated (step S1106). Tamper-resistant module 1 (120) generates the new key.

Shared key control unit 1 (110) registers the generated key in key management table 1 (113) as a key in key group 1 (130) (step S1107).

Subsequently, it is checked whether any of the keys for which migration and shared use are permitted as found in S1105 have child keys (step S1108). If such a key does not exist, processing proceeds to step S1106, and child keys are generated for the keys for which migration and shared use are permitted. In the example in Fig. 4, K31 has child keys and is selected as a key for which migration and shared use are permitted.

Next, the keys for which migration and shared use are permitted and which have child keys, as selected in S1107, are loaded (step S1109). Loading refers to decryption whereby, since child keys are encrypted by parent keys, a key that is requested to be loaded is decrypted based on parent-child relationships by tracing the tree structure from K10, the root key, in the direction of the leaves. In the example in Fig. 4, K31 is loaded.

Next, shared key control unit 1 (110) requests migration to tamper-resistant module 1 (120) in order to migrate the key loaded in S1109 from tamper-resistant module 1 (120) to tamper-resistant module 2 (220) (step S1110). Hereinafter, a key that is migrated is referred to as a migration key. In the example in Fig. 4, K31 is a migration key, and K33 and K34 are set as shared keys.

Subsequently, having received a request for migration, tamper-resistant module 1 (120) encrypts the migration key with the public key received in S1101 and returns the migration key to shared key control unit 1 (110) (step S1111). In the example in Fig. 4, K31 is encrypted with the public key of K20.

Next, shared key control unit 1 (110) transmits the encrypted migration key to shared key control unit 2 (210) (step S 1112). Note that shared key control unit 1 (110) and shared key control unit 2 (210) have been described as directly transmitting and receiving data. However, data transmission need not be direct, but may pass through a control unit in a third party.

Next, shared key control unit 2 (210) issues a request for completion of migration of a key to tamper-resistant module 2 (220) (step S1113).

Subsequently, tamper-resistant module 2 (220) decrypts the encrypted migration key with the private key of root key 2 (221) (step S1114). In the example in Fig. 4, K31 is decrypted with the private key of K20.

Next, tamper-resistant module 2 (220) sets the stakeholder identifier 506 and key use restriction information 507 in the stakeholder field 505 of the key attribute information for the migration key, which is now plaintext, as the key use restriction information for stakeholder 2 (step S1115).

Also, in S1115, if the link information 508 is link information to a parent key in Fig. 6A, the link information 508 of the stakeholder field 505 is set to the parent key at the migration destination, whereas if the link information 508 is link information to a child key in Fig. 6B, the link information 508 is not changed.

In the example in Fig. 7, the key attribute information for K31 and the key attribute information for K32 differ in the stakeholder identifier 506, key use restriction information 507, and link information 508 in the stakeholder field 505. Other values are set the same. With these settings, K31 can only be used in the environment of stakeholder 1, and K32 can only be used in the environment of stakeholder 2.

Next, tamper-resistant module 2 (220) sets the key set in step S1115 to a designated position in the shared key group (330) (S1116). In the example in Fig. 4, K32 is set as a child of K20. Therefore, the private key of K32 is encrypted with the public key of K20.

Subsequently, the key use restriction information for stakeholder 2 is transmitted to shared key control unit 1 (110) from tamper-resistant module 2 (220) via shared key control unit 2 (210) (step S1117).

Next, shared key control unit 2 (110) sets the key use restriction information for stakeholder 2 in the key attribute information of the key set as a shared key (child key of migration key) (step S 1118).

In the example in Fig. 7, information for stakeholder 2 is added to the stakeholder field 505 of the key use restriction information for K33 and K34. Via this processing, two stakeholder fields, "SH1" and "SH2" are set in the stakeholder field 505 of K33 and K34, and the key use restriction information (PCR) of stakeholder 1 and key use restriction information (PCR) of stakeholder 2 are set as the key use restriction information in these two stakeholder fields. By setting the fields in this way, K33 and K34 become keys that can be shared in the environment of stakeholder 1 and the environment of stakeholder 2.

Next, shared key control unit I (110) transmits, from key management table 1 (113), the key IDs and key attribute information addresses set in S 1118 to shared key control unit 2 (210) (step S 1119). In the example in Fig. 4, the key ID and key attribute information of K33 and K34 are transmitted.

Subsequently, shared key control unit 2 (210) registers the key IDs and key attribute information addresses received in S1119 in key management table 2 (212).

Via the above processing, shared keys K33 and K34 become usable by shared key control unit 1 (110) and shared key control unit 2 (210).

This concludes the description of the flowchart in Fig. 11.

As described above, in Embodiment 1, when shared key control unit 2 (210) receives, from shared key control unit 1 (110), notification of a request for shared use of a key included in key group 1 (130), and when stakeholder 2 (which corresponds to shared key control unit 2 (210)) depends on stakeholder 1 (which corresponds to shared key control unit 1 (110)), a predetermined key K31 that is included in key group 1 (130) and that is migratable to key group 2 (230) is migrated to key group 2 (230).

In other words, under the condition that stakeholder 2 depends on stakeholder 1, the entire key group included in a tree structure having a predetermined key K31 as a parent key is not copied, but rather only the predetermined key K31 is copied, and the key group included in a tree structure having the predetermined key K31 as the parent key is set as a shared key group (330) for tamper-resistant module 1 (120) and tamper-resistant module 2 (220). Therefore, inefficiency due to the existence of duplicates of an entire key group included in a tree structure having the predetermined key K31 as the parent key is avoided.

Furthermore, in shared key control unit 2 (210), the predetermined key K31 is encrypted using a key included in key group 2 (230) and stored in key group 2 (230), and keys at a lower level in key group 1 (130) than the predetermined key K31, such as K33 and K34, are shared. Therefore, by simply migrating the predetermined key K31, keys such as K33 and K34 that are at a lower level than the predetermined key K31 in key group 1 (130), which is managed by tamper-resistant module 1 (120) corresponding to shared key control unit 1 (110), are shared with shared key control unit 2 (210). As a result, shared key control unit 2 (210) uses the shared key group (330) or the encrypted shared data (340) stored by the encrypted data storage unit 40 via a simple structure.

Furthermore, shared key control unit 2 (210) can use the encrypted shared data (340) stored in the encrypted data storage unit (40) only when stakeholder 2 depends on stakeholder 1. As a result, the key structure to manage predetermined data is simplified in tamper-resistant module 1 (120) and tamper-resistant module 2 (220), while guaranteeing confidentiality of the shared key group (330) and the encrypted shared data (340).

Moreover, shared key control unit 1 (110) determines that stakeholder 2, which corresponds to shared key control unit 2 (210), depends on stakeholder 1 when determining, based on stakeholder certificates (150, 250) that in the stakeholder model, stakeholder 2 at least uses tamper-resistant module 1 (120), which corresponds to stakeholder 1. In this way, the dependency relationship between stakeholder 2 and stakeholder 1 is reliably determined. Therefore, the key structure to manage predetermined data is simplified in tamper-resistant module 1 (120) and tamper-resistant module 2 (220), while reliably prohibiting access by a malicious stakeholder to the shared key group (330) and the encrypted shared data (340).

When migrating a key, attribute information indicating whether permission is granted for migration from key group 1 (130) is referred to, and a predetermined key that is included in key group 1 (130) and is migratable to key group 2 (230) is sought. Accordingly, by simply referring to key attribute information, a migratable key such as K31 can easily be searched for, thus simplifying the search for a migratable key.

When a key that is included in key group 1 (130) and is migratable to key group 2 (230) does not exist in shared key control unit 1 (110), a migratable key is generated, and the generated key is migrated to key group 2 (230). As a result, even when a predetermined key that is included in key group 1 (130) and is migratable to key group 2 (230) does not exist, shared key control unit 2 (210) can share a key included in key group 1 (130). Therefore, shared key control unit 1 (110) stores encrypted data 1 (140) encrypted with an encryption key included in key group 1 (130) in the encrypted data storage unit as encrypted shared data (340), and shared key control unit 2 (210) accesses this encrypted shared data (340).

Furthermore, by generating position information on the positions of keys at a level lower than a predetermined key included in key group 1 (130) as link information for the predetermined key and migrating the link information, shared key control unit 2 (210) can determine the positions of keys at a level lower than the predetermined key by referring to the link information 508 of the predetermined key. Accordingly, the keys at a level lower than the predetermined key are shared between tamper-resistant module 1 (120) and tamper-resistant module 2 (220) without being copied as keys managed by tamper-resistant module 2 (220). As a result, inefficiency due to the existence of duplicates of an entire key group included in a tree structure having the predetermined key as the parent key is avoided in tamper-resistant module 1 (120) and tamper-resistant module 2 (220). For example, K33 and K34 are made shared keys by migrating information including the link information 508 in K31. This is achieved by using, for example, the link information 508 in Fig. 6B.

Also, by generating position information on a predetermined key included in key group 1 (130) and position information on a predetermined key in key group 2 (230) as link information 508 of keys at a level lower than the predetermined key included in key group 1 (130), the position of the parent key that encrypts the lower level keys can be determined by referring to the link information 508 of the lower level keys. Therefore, even when keys at a lower level than a predetermined key included in key group 1 (130) are shared between tamper-resistant module 1 (120) and tamper-resistant module 2 (220), the key used to encrypt the keys at a lower level than the predetermined key included in key group 1 (130) can easily be identified. This is achieved by using, for example, the link information 508 in Fig. 6A.

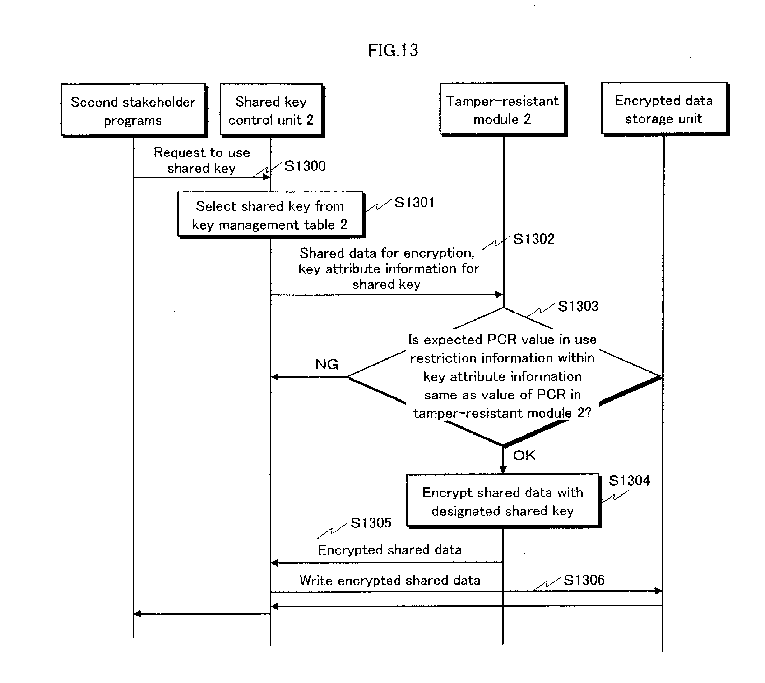

### <Fig. 13: Flowchart of Shared Key Use>

Fig. 13 is a flowchart when using a shared key set in Fig. 12 and shows the case when the second stakeholder programs (200) use shared key K33 or K34 via shared key control unit 2 (210).

First of all, second stakeholder programs (200) transmit a request for encryption with a shared key, along with the ID of the shared key, to shared key control unit 2 (210) (step S 1300).

Next, shared key control unit 2 (210) selects a shared key from key management table 2 (213) based on the ID received in S1300 (step S1301).

Subsequently, shared key control unit 2 transmits data for encryption and key attribute information for the shared key to tamper-resistant module 2 (220) (step S1302).

Next, tamper-resistant module 2 (220) compares the value of PCR information in the use restriction information within the key attribute information with the actual value recorded in the PCR, checking whether the values are the same (step S1303).

If the values are determined to be the same, processing proceeds to S1304. On the other hand, if the values are determined not to be the same, an error is returned to shared key control unit 2 (210). Upon receiving an error, shared key control unit 2 (210) proceeds to error processing, which is not shown in the figures.

Next, tamper-resistant module 2 (220) encrypts shared data with the shared key and returns the encrypted data to shared key control unit 2 (210) (steps S1304, S 1305).

Next, shared key control unit 2 (210) writes the data encrypted with the shared key in the encrypted data storage unit (step S1306).

Subsequently, the second stakeholder programs (200) are notified that writing of encrypted data is complete via shared key control unit 2 (210).

This concludes the description of the flowchart in Fig. 13.

Note that in Embodiment 1, key use restriction information has been described as PCR information, but key use restriction information is not limited in this way. F or example, key use restriction information may be any type of authentication information, such as a secure counter value of the TPM, comparison information for biometric authentication, etc. Further more, key use may be restricted by a combination of such pieces of authentication information.

For example, a counter value may be combined with PCR, and use of the shared key may be permitted only when both of these values match. The key use restriction information may also be a use permission flag. If such key use restriction information is "1", permission is granted, and if such key use restriction information is "0", permission is not granted.

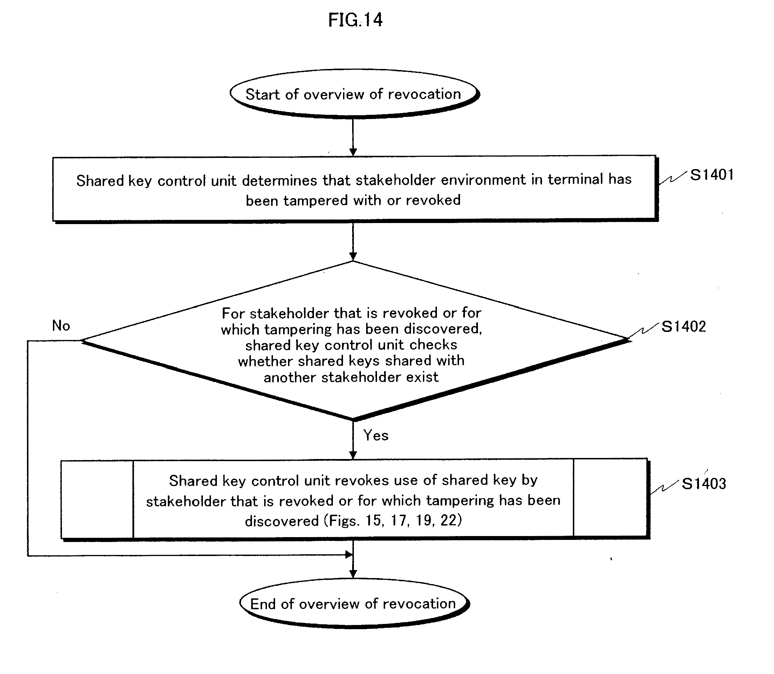

### <Fig. 14: Flowchart Overview of Revoking a shared key>

Fig. 14 is a flowchart overview of revoking a shared key. When a shared key is shared by stakeholder 1 and stakeholder 2, and one of the stakeholder environments is revoked, or when tampering has been discovered in one of the stakeholder environments, this processing flow is for preventing use of the shared key by the revoked stakeholder or the stakeholder in which tampering has been discovered.

First, the shared key control unit determines that a stakeholder environment in the terminal has been revoked or discovers tampering with a stakeholder environment in the terminal (step S1401). Revoked IDs are included in the revocation list, and thus a determination regarding revocation is made by referring to the IDs. Tampering is checked for by providing the information processing terminal with a certificate that includes a hash value of the stakeholder programs and checking the programs either statically or dynamically to discover any tampering with the programs.

Next, for a stakeholder that is revoked or in which tampering has been discovered, the shared key control unit checks whether any shared keys shared with another stakeholder exist (step S1402). If so, processing proceeds to step S 1403. If a shared key does not exist, no shared key needs to be revoked, and thus processing for revocation terminates.

Next, the shared key control unit revokes use of the shared key by the stakeholder environment that is revoked or in which tampering has been discovered (step S1403). Details on processing for revocation are described below with an example.

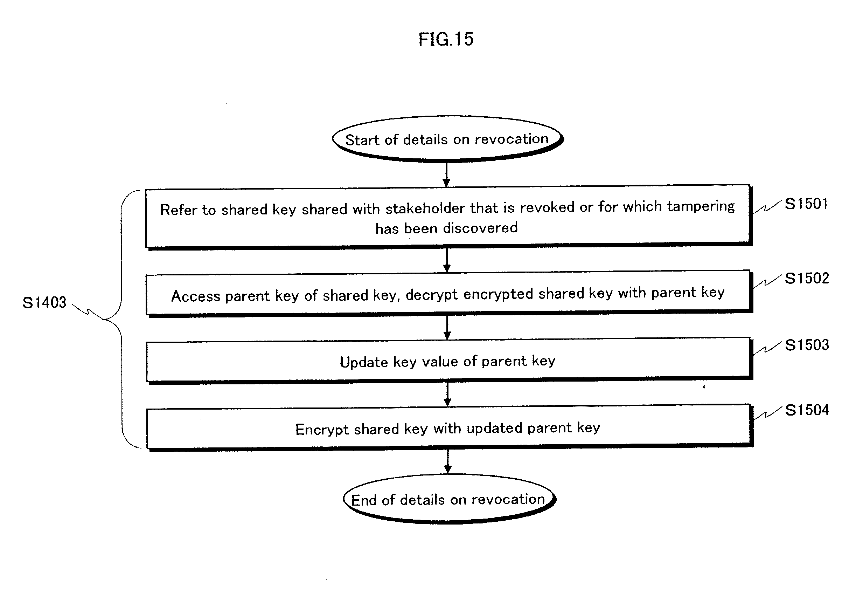

### <Fig. 15: Detailed Flowchart of Revoking a shared key>

Fig. 15 is a detailed flowchart of revoking a shared key and is a detailed version of S1403 in Fig. 14.

First, the shared key control unit determines which shared keys are shared between a stakeholder that is revoked or in which tampering has been discovered and another stakeholder (step S1501). This determination is made by referring to the stakeholder field 505 in the key attribute information.

Next, the parent key of the shared key determined in S 1501 is accessed and used to decrypt the encrypted shared key (step S1502).

Next, the shared key control unit uses a random number generation function to update the key value of the key attribute information for the parent key with a random number (step S 1503). Note that while the key value is described as being updated with a random number, updating is not limited in this way. As long as the key value is overwritten with a different value, a value other than a random number may be used.

Next, the shared key is encrypted with the updated parent key (step S 1504).

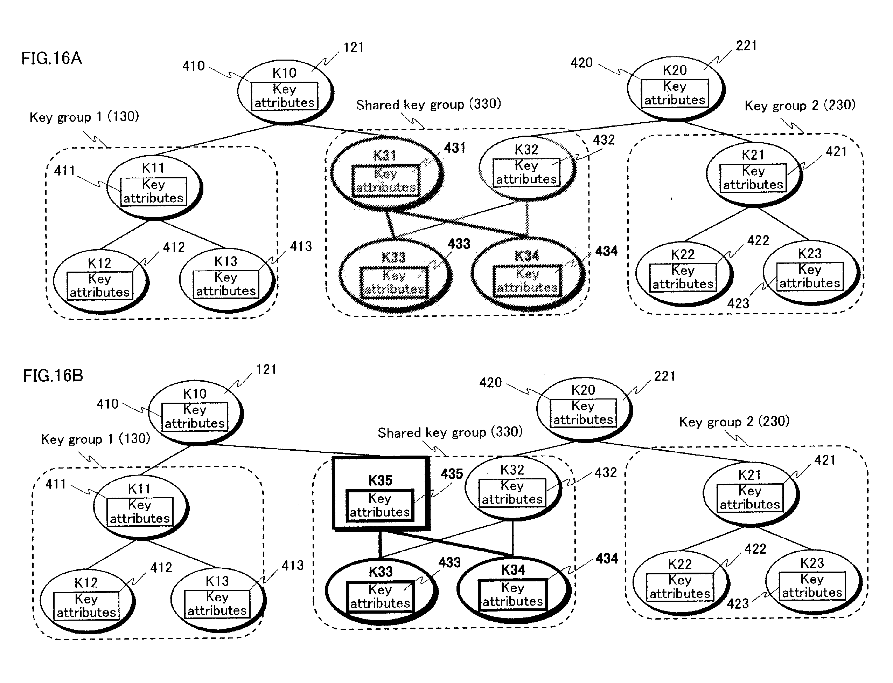

Figs. 16A and 16B are examples of conditions before and after the processing for revocation in Fig. 15 is performed.

Fig. 16A shows conditions before revocation. In this example, shared keys K33 and K34 are shared between stakeholder 1 and stakeholder 2.

Fig. 16B is an example of conditions after revoking use of K33 and K34 by the environment of stakeholder 2 in the case when the environment of stakeholder 2 is revoked or tampering has been discovered in the environment.

The key value of K31 is overwritten with a random number. The key after overwriting is set as K35. By doing so, shared keys K33 and K34 are encrypted with K35, and K35 is encrypted with K10. Therefore, stakeholder 2 cannot decrypt K35. As a result, stakeholder 2 cannot decrypt K33 or K34, either. Data encrypted with K33 and K34 is thus protected from malicious use in a malicious stakeholder environment.

This concludes the description of Embodiment 1.

As described above, when it is detected that the second stakeholder program environment (second stakeholder programs (200), shared key control unit 2 (210), and tamper-resistant module 2 (220)) has been attacked from the outside, tamper-resistant module 1 (120) generates a replacement key to replace a predetermined key, uses the replacement key to encrypt keys included in a tree structure having the predetermined key as a parent key, and uses the parent key of the predetermined key to encrypt the replacement key. As a result, shared key control unit 2 (210) cannot use the predetermined key to decrypt keys included in a tree structure having the replacement key as a parent key. Therefore, shared key control unit 2 (210) cannot use predetermined data encrypted with a key included in the tree structure having the replacement key as a parent key. The predetermined data is thus protected from malicious use. For example, in this case, the predetermined key is K31, and the replacement key is K35.

Note that in Embodiment 1, shared key control unit 1 (110) and shared key control unit 2 (210) are structured as separate control units, yet the functions of shared key control unit 1 (110) and shared key control unit 2 (210) may be implemented as one control unit.

In such a configuration, shared key control unit 1 (110) and shared key control unit 2 (210) are components of the same shared key control unit. Therefore, one shared key control unit integrally controls shared keys shared between two stakeholders, allowing for more flexible control of access.

Note that in Embodiment 1, a description has been provided for setting shared keys and for revoking shared keys after shared keys have been set, in order to prevent malicious access to shared keys by a malicious stakeholder. Revoked keys, however, may be reinstated as shared keys.

For example, if an update is performed via the stakeholder management server to return a malicious stakeholder to a legitimate stakeholder environment, shared keys that were revoked may be reinstated as shared keys.

More specifically, when there is a shared key shared between stakeholder 1 and stakeholder 2, and stakeholder 2 is determined to be malicious, the shared key is revoked for use by stakeholder 2.

Subsequently, if the environment of malicious stakeholder 2 downloads an update module from the second stakeholder management server and the environment of malicious stakeholder 2 is updated, resulting in a legitimate stakeholder environment, then the revoked shared key is reinstated for use by stakeholder 2.

Reinstating of the shared key can be achieved by setting a shared key as described in Embodiment 1 for the updated stakeholder 2, and thus a description of processing for reinstating is omitted.

### (Embodiment 2)

The method in Embodiment 2 is an example of a different method than in Embodiment 1 for revoking a shared key. A description of structures and processing that are the same as Embodiment 1 is omitted, whereas processing unique to Embodiment 2 is described with reference to the figures.

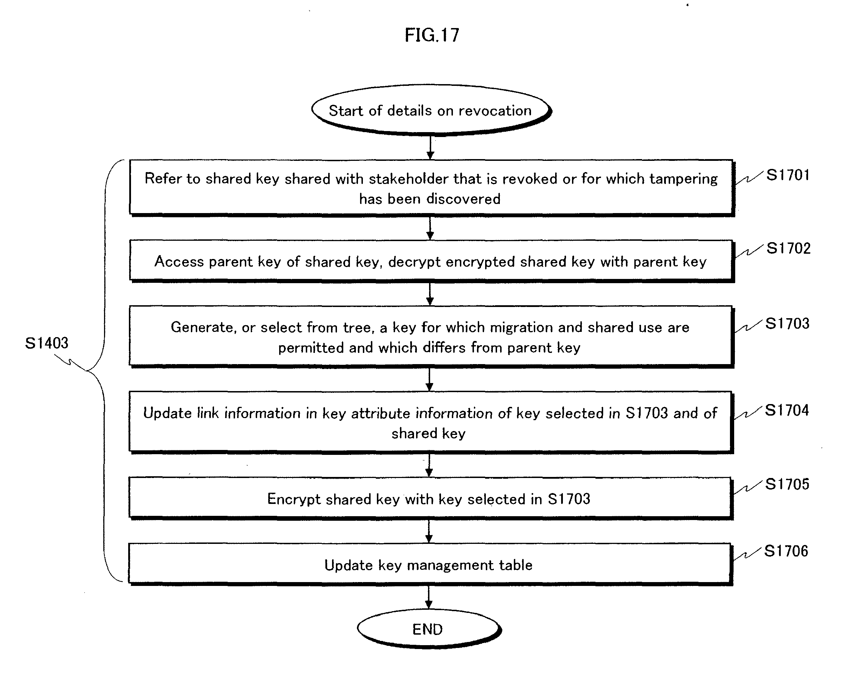

### <Fig. 17: Detailed Flowchart of Revocation>

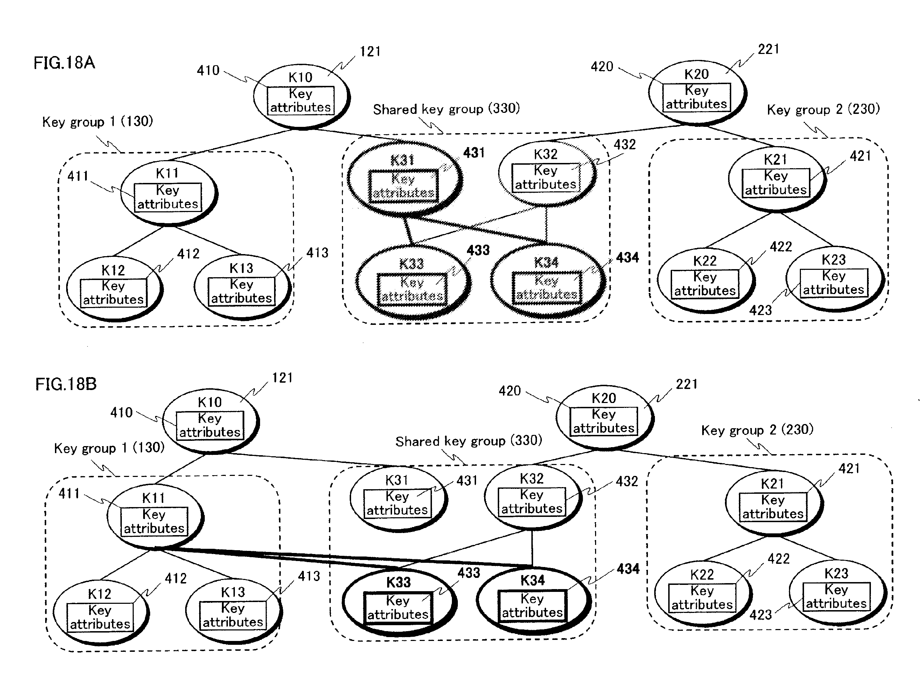

Fig. 17 is a detailed flowchart of revoking a shared key and is a detailed version of S1403 in Fig. 14. Figs. 18A and 18B show conditions before and after the processing for revocation in Fig. 17 is performed. The following is a description of Figs. 17, 18A, and 18B.

Steps S1701 and S1702 are the same as steps S1501 and S1502 in Embodiment 1, and therefore a description thereof is omitted.

Next, a key for which migration and shared use are permitted and which differs from the parent key of the shared key is selected from keys within the tree other than the shared key group (330) in S 1702. If such a key does not exist, a key is newly generated (step S1703).

As described below, in Embodiment 2, the selected key is set as a new parent key for the shared key, thus preventing stakeholder 2 from using the shared key. In order to fulfill only this objective, it would suffice to choose a key other than the parent key of the shared key, regardless of permission for migration and sharing. However, in Embodiment 2, a key for which migration and shared use are permitted is selected.

The reason for selecting such a key is described with reference to the following two cases.

The first case is when a shared key is revoked for use by a stakeholder, due to the stakeholder environment having been determined to be malicious, yet the stakeholder environment is then updated, thus reverting to being a legitimate stakeholder environment, after which use of the shared key is reinstated. To reinstate use of the shared key, it is necessary to migrate the parent key of the shared key. Out of consideration for this migration, a key for which migration and shared use are permitted needs to be selected as a new parent key.

The second case is when a shared key is shared by three or more stakeholders. For example, if a shared key shared by stakeholders 1, 2, and 3 is to be revoked only for stakeholder 2, the shared key needs to be set for continued sharing between stakeholder 1 and stakeholder 3. Changing the parent key of the shared key means that stakeholder 3 is also no longer able to use shared key. Accordingly, in order for stakeholder 3 to be able to continue to share the shared key, after changing the parent key of the shared key, the parent key needs to be migrated from stakeholder 1 to stakeholder 3. If the parent key of the shared key is migrated from stakeholder 1 to stakeholder 3, both stakeholders can use the shared key.

Next, since the key selected in S1703 is set as the parent key of the shared key, the link information 508 in the key attribute information is updated so that the key selected in S1703 and the shared key are in a parent-child relationship (step S 1704).

The shared key is then encrypted with the key selected in S 1703 (step S 1705).

Finally, the key management table is updated (step S1706).

Figs. 18A and 18B are examples of conditions before and after the processing for revocation in Fig. 17 is performed.

Fig. 18A shows conditions before revocation. In this example, shared keys K33 and K34 are shared between stakeholder 1 and stakeholder 2.

Fig. 18B is an example of conditions after revoking use of K33 and K34 by the environment of stakeholder 2 in the case when the environment of stakeholder 2 is revoked or tampering has been discovered in the environment.

The parent key of K33 and K34 is K11, which is a key for which permission for migration and shared use are permitted other than K31. With this setting, K33 and K34 are encrypted with K11, and K11 is encrypted with K10. Therefore, stakeholder 2 cannot decrypt K11, and as a result cannot decrypt K33 and K34. Data encrypted with K33 and K34 is thus protected from malicious use in a malicious stakeholder environment.

This concludes the description of Embodiment 2.

As described above, when it is detected that the second stakeholder program environment (second stakeholder programs (200), shared key control unit 2 (210), and tamper-resistant module 2 (220)) has been attacked from the outside, tamper-resistant module 1 (120) uses a key, other than keys included in a tree structure having the predetermined key as a parent key, to encrypt predetermined data. As a result, shared key control unit 2 (210) cannot use keys included in the tree structure having the predetermined key as a parent key to decrypt the predetermined data. Therefore, shared key control unit 2 (210) cannot use predetermined data encrypted with a key other than keys included in the tree structure having the predetermined key as a parent key. The predetermined data is thus protected from malicious use. For example, this case can be implemented using K31 as the predetermined key and K11 as the key other than keys included in the tree structure having the predetermined key as a parent key.

Note that in Embodiment 2, like Embodiment 1, if a malicious stakeholder environment is updated, for example, to return to being an authentic stakeholder environment, shared use of a shared key can be reinstated. Reinstating of the shared key can be achieved by setting a shared key as described in Embodiment 2 for the updated stakeholder 2, and thus a description of processing for reinstating is omitted.

### [Embodiment 3]

The method in Embodiment 3 is an example of a different method than in Embodiments 1 and 2 for revoking a shared key. A description of structures and processing that are the same as Embodiments 1 and 2 is omitted, whereas processing unique to Embodiment 3 is described with reference to the figures.

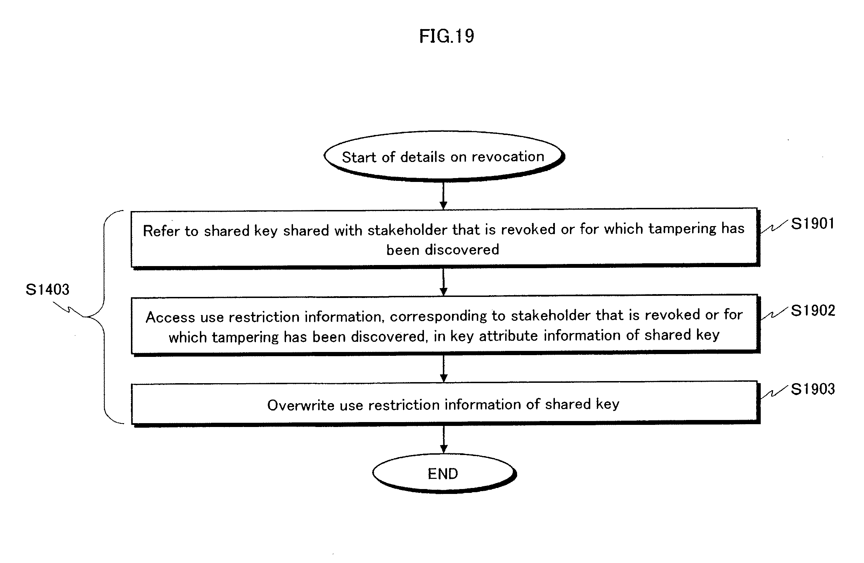

### <Fig. 19: Detailed Flowchart of Revocation>

Fig. 19 is a detailed flowchart of revoking a shared key and is a detailed version of S1403 in Fig. 14.

Steps S1901 and S1902 are the same as steps S1501 and S1502, and therefore a description thereof is omitted.

Next, a shared key that has been determined in S1901 to be shared between a stakeholder that is revoked, or in which tampering has been discovered, and another stakeholder is accessed, and key use restriction information corresponding to the stakeholder that is revoked or in which tampering has been discovered is accessed (step S1902).

Next, the shared key control unit uses a random number generation function to update, with a random number, the key use restriction information in the key attribute information corresponding to the shared key selected in S1902 (step S1503). Note that while the key use restriction information is described as being updated with a random number, updating is not limited in this way.

In Embodiment 3, if the first stakeholder environment managed by stakeholder I detects that the second stakeholder environment has been tampered with or revoked, shared key control unit I (110) overwrites the key use restriction information 508 in the key attribute information of data encrypted with the shared key so that shared key control unit 2 (210) cannot use the data. As a result, since shared key control unit 2 (220) cannot load the shared key, data encrypted with the shared key is protected from malicious use.

Note that only the key use restriction information for the shared key has been described as updated, but the key use restriction information for the parent key of the shared key may also be updated. Updating key use restriction information for the parent key makes it possible, when shared keys span a plurality of tree levels, to revoke all child keys by tracing upwards from the shared key towards the root and revoking only the uppermost key in the shared key group (330).

As described above, shared key control unit 2 (210) compares key use restriction information 507 generated by the second stakeholder environment, which has not been tampered with, and environment information recorded in the PCR (223) as actually received from the second stakeholder programs (200). The key can be used only when the comparison results are positive.

As a result, if the second stakeholder programs (200) are tampered with or revoked, the comparison results indicate a discrepancy, and shared key control unit 2 (210) cannot use a predetermined key to decrypt a key included in a tree structure having the predetermined key as a parent key. Therefore, shared key control unit 2 (210) cannot decrypt predetermined data encrypted with a key included in the tree structure having the predetermined key as a parent key, and the predetermined data is thus protected from malicious use.

For example, if the second stakeholder programs (200) have been tampered with, K33 cannot be loaded from shared key control unit 2 (210), and therefore data D34 encrypted with K33 is protected from malicious use.

If the first stakeholder environment managed by stakeholder 1 detects that the second stakeholder environment has been tampered with or revoked, shared key control unit 1 (110) overwrites key use restriction information so that shared key control unit 2 (210) cannot use keys included in a tree structure having a predetermined key as a parent key

As a result, since shared key control unit 2 (210) cannot use the predetermined key to decrypt keys included in the tree structure having the predetermined key as a parent key, shared key control unit 2 (210) cannot decrypt the predetermined data encrypted with a key included in the key structure having the predetermined key as a parent key. The predetermined data is thus protected from malicious use. In this case, for example, if the predetermined key is K32 and the keys included in the tree structure having the predetermined key as a parent key are K33 and K34, then the predetermined data is protected by overwriting use restriction information for K32 or by overwriting key use restriction information for K33 and K34.

Note that like Embodiments I and 2, if a malicious stakeholder environment is updated, for example, to return to being an authentic stakeholder environment, shared use of a shared key can be reinstated. To reinstate shared use, it suffices to update key use restriction information for the updated stakeholder to key use restriction information (PCR value) that reflects updating of the stakeholder.

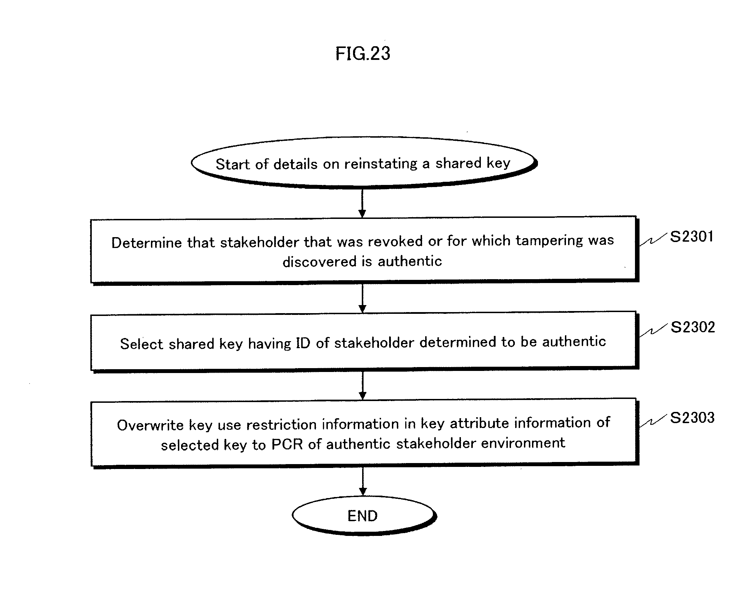

### <Fig. 23: Reinstating a Shared Key>

Fig. 23 is a flowchart of processing in Embodiment 3 to reinstate a shared key as shared when a malicious stakeholder environment is updated, for example, to return to being an authentic stakeholder environment. In this example, the environment of stakeholder 2 is updated, for example, to return to being an authentic stakeholder environment, and a shared key with the environment of stakeholder 1, for which shared use has been revoked, is reinstated as a shared key.

First, the environment of stakeholder I determines that the environment of stakeholder 2, which had been determined as malicious, has returned to being an authentic environment (step S2301). This determination is, for example, made (i) periodically, (ii) when power is turned on, or (iii) when updating of the environment of stakeholder 2 is complete.

Next, shared key control unit 1 (110) in the environment of stakeholder I refers to the key attribute information in the shared key group (330) and selects a key for which the ID of stakeholder 2 is registered in the stakeholder identifier 506 of the stakeholder field 505 (step S2302).

Finally, the key use restriction information in the key attribute information of the key selected in S2303 is updated to the environment information of the stakeholder that has become authentic (step S2303). In this example, the key use restriction information corresponding to the identifier of stakeholder 2 in the key attribute information is updated to the environment information of stakeholder 2, which has become authentic by, for example, updating.

If there is a plurality of keys that are to be shared with stakeholder 2, the processing in steps S2302 and S2303 is repeated.

In this way, the environment of stakeholder 2 once again uses shared keys that are shared with stakeholder 1 and whose shared use had been revoked.

### (Embodiment 4)

The method in Embodiment 4 is an example of a different method differs than in Embodiments 1, 2, and 3 of protecting encrypted shared data. A description of structures and processing that are the same as other Embodiments is omitted, whereas processing unique to Embodiment 4 is described with reference to the figures.

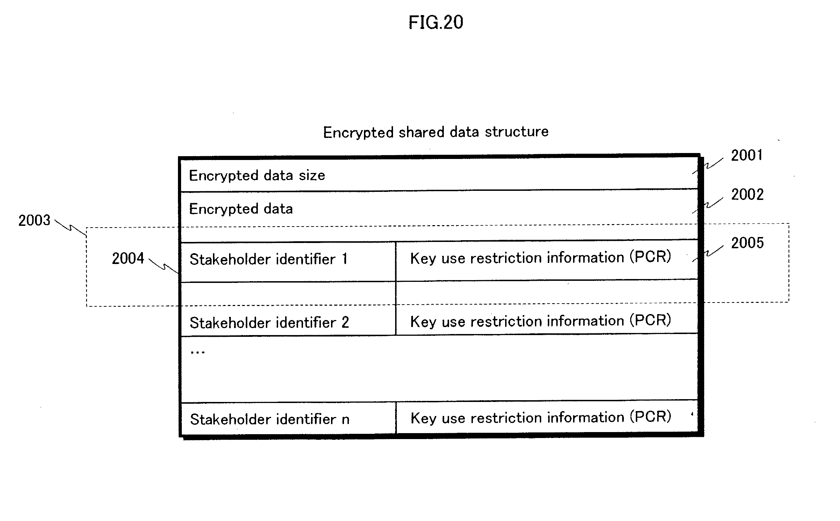

### <Fig. 20: Structure of Encrypted Shared Data>

Fig. 20 shows the structure of encrypted shared data. The encrypted shared data is provided with an encrypted data size 2001, encrypted data 2002, and stakeholder fields 2003.

The stakeholder fields 2003 list information on stakeholders with a right to access the shared data. Since encrypted shared data D33 and D34 shown in Fig. 4 are examples in which stakeholder I and stakeholder 2 have access, there are two stakeholder fields 505.

The stakeholder fields 2003 each include a stakeholder identifier 2004 and use restriction information 2005 indicating restricted use of the key.

The use restriction information 2005 is an expected PCR value and is compared with the actual value recorded in the PCRs (123, 223) provided in the tamper-resistant modules. The use restriction information restricts decryption results to be obtained from the tamper-resistant module only when the actual PCR value and the expected PCR value match.

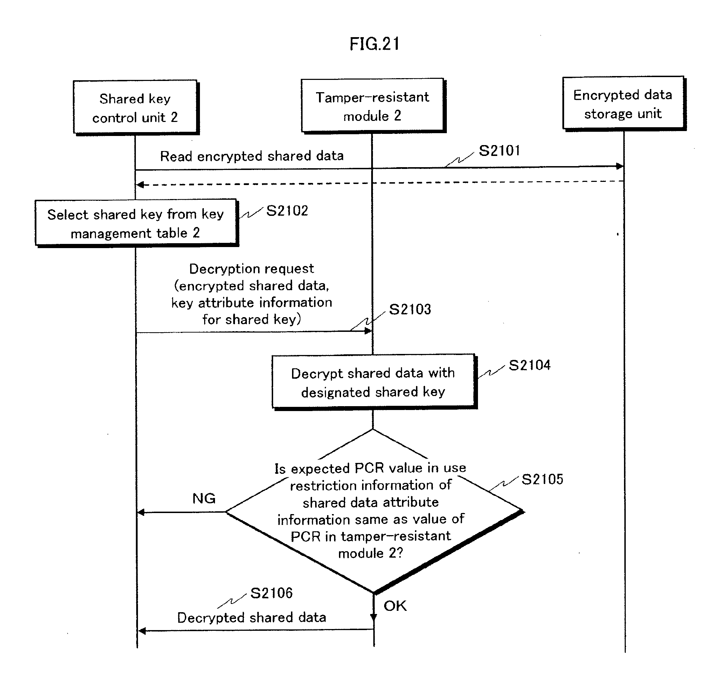

### <Fig. 21: Flowchart of Decryption of Encrypted Shared Data>

Fig. 21 is a flowchart of decryption of encrypted shared data by shared key control unit 2 (210).

First, shared key control unit 2 (210) receives a request for decryption of encrypted shared data from the second stakeholder programs (200) and reads, from the encrypted data storage unit 40, the encrypted shared data 340 to be decrypted (step S2101).

Next, shared key control unit 2 (210) selects a shared key from key management table 2 (213) (step S2102).

Shared key control unit 2 (210) then issues a request for decryption to tamper-resistant module 2 (220) with the shared key selected in S2102 and the encrypted shared data read in S2101 as parameters (step S2103).

Next, the shared key designated in S2103 is decrypted by decrypting keys, based on a parent-child relationship, from the root key 2 in the key tree in the direction of the leaves. A plaintext shared key is thus obtained, and the encrypted shared data is decrypted (step S2104).

Subsequently, tamper-resistant module 2 (220) compares the expected PCR value, set as use restriction information for the encrypted shared data for which decryption was requested, with the actual value recorded in the PCR (223) (step S2105). As a result of comparison, if the two values match, decrypted data is returned to shared key control unit 2 (210) (step S2106). As a result of comparison, if the two values do not match, decrypted data is not returned to shared key control unit 2 (210). Only error notification is returned.

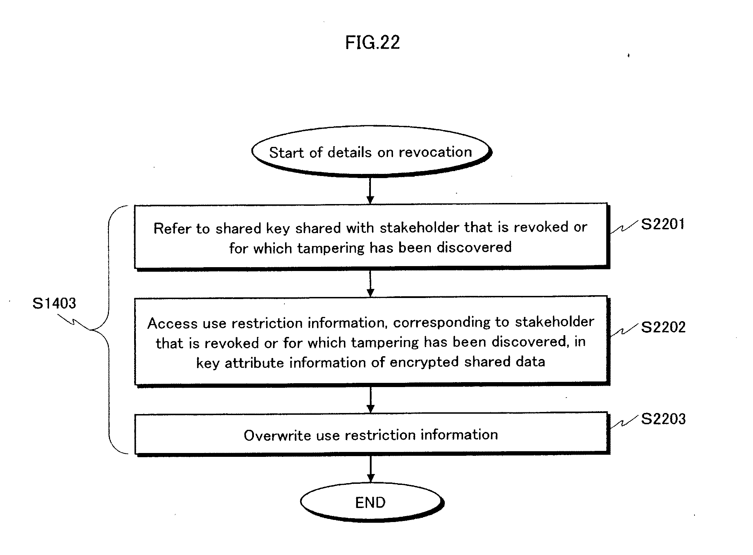

### <Fig. 22: Revocation>

Fig. 22 is a detailed flowchart of disabling decryption of encrypted shared data and is a detailed version of S 1403 in Fig. 14 in Embodiment 4.

First, it is determined whether a stakeholder that is revoked, or in which tampering has been discovered, shares shared data with another stakeholder (step S2201). This determination is made by referring to the stakeholder fields 2003 in the data structure of the encrypted shared data.

Next, use restriction information for the encrypted shared data determined in S2201 is accessed (step S2202).

The shared key control unit then uses a random number generation function to update, with a random number, the use restriction information accessed in S2202 (step S2203). Note that while the use restriction information is described as being updated with a random number, updating is not limited in this way.

With this structure, if a malicious stakeholder environment that is revoked, or in which tampering has been discovered, requests decryption of encrypted shared data, the comparison results in S2105 indicate a discrepancy. Decrypted data for the encrypted shared data cannot be obtained, and the encrypted shared data is thus protected from malicious use.

As described above, shared key control unit 2 (220) compares encrypted data use restriction information generated by the second stakeholder environment, which has not been tampered with, and environment information recorded in the PCR (223) of tamper-resistant module 2 (220) as actually received from the second stakeholder environment. The encrypted data is only decrypted when the comparison results are positive.

As a result, if the second stakeholder environment has been tampered with or revoked, the comparison results indicate a discrepancy, and shared key control unit 2 (210) cannot use a predetermined key to decrypt encrypted data that has been encrypted with a key included in a tree structure having the predetermined key as a parent key. The encrypted data is thus protected from malicious use.

For example, if the second stakeholder programs (200) have been tampered with, then any attempt to obtain decrypted data of D33, encrypted with K33, from tamper-resistant module 2 (220) will not yield decrypted results, and D33 is protected from malicious use.

If the first stakeholder environment managed by stakeholder 1 detects that the second stakeholder environment has been tampered with or revoked, shared key control unit 1 (110) overwrites encrypted data use restriction information 2005 so that shared key control unit 2 (210) cannot use encrypted data encrypted with a key included in a tree structure having a predetermined key as a parent key.

As a result, shared key control unit 2 (210) cannot use a predetermined key to perform decryption processing that uses a key included in a tree structure having a predetermined key as a parent key. The predetermined data is thus protected from malicious use.

### Note that Embodiments 1 through 4 may be implemented in combination.

Also, in Embodiments 1 through 4, the tamper-resistant modules (150, 250) are implemented as TPMs or MTMs. Therefore, either Trusted Boot as specified by the TCG or Secure Boot as specified by the TCG Mobile specifications may be adopted. Alternatively, any structure that verifies integrity of executed programs may be used.

In this way, when the first shared key control unit boots securely, existence of an attack from outside the second shared key control unit can be determined by detecting whether the second shared key control unit has been attacked from the outside.

Checking for tampering with a stakeholder environment may use the Attestation function specified by the TCG. The determination results of the Attestation function on the server may be transmitted to information processing terminal 10 to detect tampering with a stakeholder, or the revocation list 14 transmitted from the server as described above may be used.

In this way, shared key control unit 1 (110) prevents malicious use of a shared key or encrypted shared data by a malicious shared key control unit 2 (210) by receiving, from an external server, notification of detection of tampering with, or revocation of, shared key control unit 2 (210).

Note that if a malicious stakeholder environment is updated, for example, to return to being an authentic stakeholder environment, shared use of encrypted shared data can be reinstated. To reinstate for shared use, it suffices to update key use restriction information in the encrypted shared data for the updated stakeholder to key use restriction information (PCR value) that reflects updating of the stakeholder.

Note that the only differences in the processing to make a shared key shared again in Embodiment 4 are that the information referred to in S2202 and S2203 in Fig. 23 is not the key attribute information in Fig. 5, but rather the shared key encrypted data in Fig. 20, and updated information is not the key use restriction information 508, but rather key use restriction information 2005. Further description is omitted.

In Embodiments 1 through 4, processing to make a shared key shared again is triggered by a stakeholder environment other than a stakeholder determined to be malicious. However, a malicious stakeholder may, after updating, verify itself to be authentic and issue a request to reinstate a shared key to the stakeholder with which the shared key is shared.

### (Other Modifications)

While the present invention has been described based on the above Embodiments, the present invention is of course not limited to these Embodiments. The present invention also includes cases such as the following.

(1) Each of the above devices is, specifically, a computer system composed of a microprocessor, ROM, RAM, hard disk unit, display unit, keyboard, mouse, etc. Computer programs are stored on the RAM or the hard disk unit. By operating in accordance with the computer programs, the microprocessor achieves the functions of each device. In order to achieve predetermined functions, the computer programs are composed of a combination of multiple command codes that indicate instructions for the computer. Note that each of the devices is not limited to inclusion of all of the following components: microprocessor, ROM, RAM, hard disk unit, display unit, keyboard, mouse, etc.; each of the devices may include only some of these components.

(2) Part or all of the components comprising each of the above-described devices may be assembled as one system Large Scale Integration (LSI). A system LSI is an ultra-multifunctional LSI produced by integrating multiple components on one chip and, more specifically, is a computer system including a microprocessor, ROM, RAM, and the like. Computer programs are stored in the RAM. The microprocessor operates according to the computer programs, and thereby the system LSI accomplishes its functions.

Individual components comprising each of the above-described devices may respectively be made into discrete chips, or part or all of the components may be made into one chip.

Although referred to here as a system LSI, depending on the degree of integration, the terms IC, LSI, super LSI, or ultra LSI are also used. In addition, the method for assembling integrated circuits is not limited to LSI, and a dedicated communication circuit or a general-purpose processor may be used. A Field Programmable Gate Array (FPGA), which is programmable after the LSI is manufactured, or a reconfigurable processor, which allows reconfiguration of the connection and setting of circuit cells inside the LSI, may be used.

Furthermore, if technology for forming integrated circuits that replaces LSIs emerges, owing to advances in semiconductor technology or to another derivative technology, the integration of functional blocks may naturally be accomplished using such technology. The application of biotechnology or the like is possible.

(3) Part or all of the components comprising each of the above devices may be assembled as an IC card detachable from each device, or as a single module. The IC card/module is a computer system that includes a microprocessor, ROM, RAM, etc. The IC card/module may include therein the above-mentioned ultra-multifunctional LSI. The microprocessor operates according to computer programs, and the IC card/module thereby accomplishes its functions. The IC card/module may be tamper resistant.

(4) The present invention may be the methods described above. The present invention may be computer programs that achieve the method by a computer or may be a digital signal comprising the computer programs.

The present invention may also be a computer-readable recording medium, such as a flexible disk, hard disk, CD-ROM, MO, DVD, DVD-ROM, DVD-RAM, BD (Blu-ray Disc), or semiconductor memory, on which the above-mentioned computer program or digital signal is recorded. The present invention may also be the digital signal recorded on such a recording medium.

The present invention may also be the computer programs or digital signal to be transmitted via networks, of which telecommunications networks, wire/wireless communications networks, and the Internet are representative, or via data broadcasting.

The present invention may also be a computer system comprising a microprocessor and memory, the memory storing the computer programs, and the microprocessor operating in accordance with the computer programs.

Also, another independent computer system may implement the computer programs or digital signal after the computer programs or digital signal are transferred via being recorded on the recording medium, via one of the above-mentioned networks, etc.

(5) The above Embodiments and Modifications may be combined with one another.

### [Industrial Applicability]

When manufacturing and selling an information processing device that handles secure data, for example, the present invention can be used as a mechanism for efficiently encrypting secure, shared data between a plurality of stakeholders by using certificates that provide the plurality of stakeholders with a dependency relationship and allow shared keys to be shared in accordance with the dependency relationship. The present invention can also be used as a mechanism for restricting access to shared keys by a malicious stakeholder.

### [Reference Signs List]

10 information processing terminal
11 first stakeholder management server
12 authentication PCR database
13 certificate management database
14 revocation list
15 network
16 second stakeholder management server
21, 22, 31, 32, 41, 42 stakeholder
23, 24, 33, 34, 43 TPM
100, 200 stakeholder programs
110, 210 shared key control unit
111, 211 multi-stakeholder model determination unit
112, 212 shared permission setting unit
113, 213 key management table
120, 220 tamper-resistant module
121, 221 root key
30 key storage unit
40 encrypted data storage unit
50 certificate storage unit
130 key group 1
230 key group 2
330 shared key group
140, 240 encrypted data
340 encrypted shared data
150, 250 stakeholder certificate
122, 221 secure memory
410, 411, 412, 413, 420, 421, 422, 423, 431, 432, 434 key attribute information
123, 223 PCR
501 migration permission flag
502 shared permission flag
503 encryption algorithm / key size
504 key value
505, 2003 stakeholder field
506, 2004 stakeholder identifier
507, 2005 key use restriction information
508, 2006 link information
601, 602, 603, 611, 612, 613 key pointer
811, 821 key ID
812, 822 key attribute information address
901 certificate version
902 serial number
903 signature algorithm
904 publisher information
905 valid duration
906 subject
907 public key information
908 TPM version
909 trust module identifying information
910 dependency stakeholder certificate identifying information
911 extension region
912 signature data
2001 encrypted data size
2002 encrypted data

## Claims

1. An information processing device comprising:
a first shared key control unit corresponding to a first stakeholder;
a second shared key control unit corresponding to a second stakeholder;
a first tamper-resistant module that corresponds to the first stakeholder and is operable to manage, in a tree structure, a first encryption key group that includes a plurality of keys;
a data storage unit storing predetermined data encrypted using a key included in the first encryption key group; and
a second tamper-resistant module that corresponds to the second stakeholder and is operable to manage, in a tree structure, a second encryption key group that includes a plurality of keys, wherein
when the first shared key control unit receives, from the second shared key control unit, a key sharing request directed at the first encryption key group,
the first shared key control unit determines whether the second stakeholder depends on the first stakeholder and, when the determination is positive, searches the keys included in the first encryption key group for a predetermined key that is copyable to the second encryption key group and copies the predetermined key to the second encryption key group, and
the second shared key control unit encrypts the predetermined key using a key included in the second encryption key group and stores the encrypted predetermined key in the second encryption key group in order to share a key that is included in the first encryption key group at a lower level of the tree structure than the predetermined key.

2. The information processing device of claim 1, wherein
the second shared key control unit has a certificate certifying a dependency relationship with the first shared key control unit and transmits the certificate to the first shared key control unit when issuing the key sharing request directed at the first encryption key group, and
the first shared key control unit determines that the second stakeholder depends on the first stakeholder when determining, in accordance with the certificate, that the second stakeholder at least uses the first tamper-resistant module that corresponds to the first stakeholder.

3. The information processing device of claim 2, wherein
each key included in the first encryption key group has attribute information indicating whether the key is copyable from the first encryption key group to the second encryption key group, and
the first shared key control unit refers to the attribute information when searching the keys included in the first encryption key group for the predetermined key that is copyable.

4. The information processing device of claim 1, wherein
when a predetermined key that is copyable to the second encryption key group does not exist in the keys included in the first encryption key group, the first shared key control unit generates a copyable key and copies the generated key to the second encryption key group.

5. The information processing device of claim 3, wherein
the first shared key control unit (i) generates, as link information for the predetermined key, position information indicating a position of the key included in the first encryption key group at a lower level of the tree structure than the predetermined key, and (ii) copies the link information along with the predetermined key to the second encryption key group.

6. The information processing device of claim 5, wherein
the first shared key control unit generates, as link information for the key included in the first encryption key group at a lower level of the tree structure than the predetermined key, position information on a predetermined key included in the first encryption key group and position information on the predetermined key included in the second encryption key group.

7. The information processing device of claim 1, wherein
the first shared key control unit and the second shared key control unit belong to a same shared key control unit.

8. The information processing device of claim 1, wherein
when, in a first stakeholder environment managed by the first stakeholder, a second stakeholder environment managed by the second stakeholder is detected as having been tampered with or revoked, the first shared key control unit prevents the second shared key control unit from accessing the predetermined data by causing the first tamper-resistant module (i) to generate a replacement key to replace the predetermined key, (ii) to re-encrypt, using the replacement key, keys included in a tree structure having the predetermined key as a parent key, and (iii) to encrypt the replacement key using a parent key of the predetermined key.

9. The information processing device of claim 1, wherein
when, in a first stakeholder environment managed by the first stakeholder, a second stakeholder environment managed by the second stakeholder is detected as having been tampered with or revoked, the first shared key control unit prevents the second shared key control unit from using the predetermined key by causing the first tamper-resistant module to re-encrypt the predetermined data using a key other than keys included in a tree structure having the predetermined key as a parent key.

10. The information processing device of claim 1, wherein
the key included in a tree structure having, as a parent key, the predetermined key included in the first encryption key group includes, as attribute information, key use restriction information that is an expected hash value of a second stakeholder environment that is managed by the second stakeholder and has not been tampered with,
the second tamper-resistant module stores environment information that is an actual hash value of the second stakeholder environment, and
when the second shared key control unit issues the key sharing request to the first shared key control unit to use the key included in a tree structure having, as a parent key, the predetermined key included in the first encryption key group, the first shared key control unit compares the key use restriction information and the environment information, permitting use of the key only when comparison results are positive.

11. The information processing device of claim 10, wherein
when, in a first stakeholder environment managed by the first stakeholder, a second stakeholder environment managed by the second stakeholder is detected as having been tampered with or revoked, the first shared key control unit prevents the second shared key control unit from using the key included in a tree structure having the predetermined key as a parent key by rewriting the key use restriction information.

12. The information processing device of claim 1, wherein
data encrypted with the key included in a tree structure having, as a parent key, the predetermined key included in the first encryption key group includes, as attribute information, encrypted data use restriction information that is an expected hash value of a second stakeholder environment that is managed by the second stakeholder and has not been tampered with,
the second tamper-resistant module stores environment information that is an actual hash value of the second stakeholder environment, and
when the second shared key control unit issues a request to the first shared key control unit for decryption of data encrypted with the key included in a tree structure having, as a parent key, the predetermined key included in the first encryption key group, the first shared key control unit compares the encrypted data use restriction information and the environment information, decrypting the encrypted data only when comparison results are positive.

13. The information processing device of claim 12, wherein
when, in a first stakeholder environment managed by the first stakeholder, a second stakeholder environment managed by the second stakeholder is detected as having been tampered with or revoked, the first shared key control unit prevents the second shared key control unit from using encrypted data encrypted with the key included in a tree structure having the predetermined key as a parent key by rewriting the encrypted data use restriction information.

14. The information processing device of any of claims 8 through 13, wherein
when booting the first stakeholder environment and the second stakeholder environment via a secure boot, the first shared key control unit detects whether the second stakeholder environment has been tampered with or revoked, the secure boot being a function to boot only an environment that has not been tampered with by checking integrity of the environment.

15. The information processing device of any of claims 8 through 13, wherein
the first shared key control unit detects that the second stakeholder environment has been tampered with or revoked upon receiving notification from an external server that the second stakeholder environment has been tampered with or revoked.

16. A method of managing encryption keys in an information processing device,
the information processing device comprising:
a first shared key control unit corresponding to a first stakeholder;
a second shared key control unit corresponding to a second stakeholder;
a first tamper-resistant module that corresponds to the first stakeholder and is operable to manage, in a tree structure, a first encryption key group that includes a plurality of keys;
a data storage unit storing predetermined data encrypted using a key included in the first encryption key group; and
a second tamper-resistant module that corresponds to the second stakeholder and is operable to manage, in a tree structure, a second encryption key group that includes a plurality of keys,
the method comprising:
receiving, by the first shared key control unit, a key sharing request from the second shared key control unit directed at the first encryption key group;
determining, by the first shared key control unit, whether the second stakeholder depends on the first stakeholder;
searching, by the first shared key control unit, the keys included in the first encryption key group for a predetermined key that is copyable to the second encryption key group and copying the predetermined key to the second encryption key group when the determination is positive; and
encrypting, by the second shared key control unit, the predetermined key using a key included in the second encryption key group and storing the encrypted predetermined key in the second encryption key group in order to share a key that is included in the first encryption key group at a lower level of the tree structure than the predetermined key.

17. A computer program used in management of keys in an information processing device,
the information processing device comprising:
a first shared key control unit corresponding to a first stakeholder;
a second shared key control unit corresponding to a second stakeholder;
a first tamper-resistant module that corresponds to the first stakeholder and is operable to manage, in a tree structure, a first encryption key group that includes a plurality of keys;
a data storage unit storing predetermined data encrypted using a key included in the first encryption key group; and
a second tamper-resistant module that corresponds to the second stakeholder and is operable to manage, in a tree structure, a second encryption key group that includes a plurality of keys, wherein
the computer program causes a computer to perform processing to
determine whether the second stakeholder depends on the first stakeholder when the first shared key control unit receives, from the second shared key control unit, a key sharing request directed at the first encryption key group,
search in the first encryption key group for a predetermined key that is copyable to the second encryption key group and copy the predetermined key to the second encryption key group when the determination is positive, and
in the second shared key control unit, encrypt the predetermined key using a key included in the second encryption key group and store the encrypted predetermined key in the second encryption key group in order to share a key that is included in the first encryption key group at a lower level of the tree structure than the predetermined key.

18. An integrated circuit used in an information processing device and comprising an information processing unit and a memory, wherein
the information processing device comprises:
a first shared key control unit corresponding to a first stakeholder;
a second shared key control unit corresponding to a second stakeholder;
a first tamper-resistant module that corresponds to the first stakeholder and is operable to manage, in a tree structure, a first encryption key group that includes a plurality of keys;
a data storage unit storing predetermined data encrypted using a key included in the first encryption key group; and
a second tamper-resistant module that corresponds to the second stakeholder and is operable to manage, in a tree structure, a second encryption key group that includes a plurality of keys, and
the memory stores a processing program that causes the information processing unit to
determine whether the second stakeholder depends on the first stakeholder when the first shared key control unit receives, from the second shared key control unit, a key sharing request directed at the first encryption key group,
search in the first encryption key group for a predetermined key that is copyable to the second encryption key group and copy the predetermined key to the second encryption key group when the determination is positive, and
in the second shared key control unit, encrypt the predetermined key using a key included in the second encryption key group and store the encrypted predetermined key in the second encryption key group in order to share a key that is included in the first encryption key group at a lower level of the tree structure than the predetermined key.

19. The information processing device of claim 1, wherein
the first shared key control unit
decrypts the predetermined key using a key that is included in the first encryption key group and is used to encrypt the predetermined key,
re-encrypts the decrypted predetermined key using a key included in the second encryption key group, and
copies the re-encrypted key to the second encryption key group.
